# EUROPEAN PATENT APPLICATION

(11) **EP 4 166 983 A1**
(43) Date of publication of application: **19.04.2023**
(21) Application number: 22181502.0
(22) Date of filing: 28.06.2022
(51) Int. Cl.: G01S 13/72, G01S 13/89, G01S 13/87

(54) **SYSTEM AND METHODS AND COMPUTER PROGRAM PRODUCTS FOR CENTRAL, CLUSTER AIDED MULTI-HYPOTHESIS TRACKING WHICH MAY INCLUDE BIAS CORRECTION**

(30) Priority: 29.06.2021 IL 28449821
(71) Applicant: Elta Systems Ltd., Ashdod 7710201 (IL)
(72) Inventor: BADICHI, Harel, 7174240 Modi'in (IL); FRENKEL, Yeshayahu, 9979700 Carmei Yoseph (IL); NOVOSELSKY, Akiva, 7170412 Modi'in (IL); SHOMRONY-DANIELI, Merav, 4620508 Herzliya (IL); YANNAY, Netanel, 7172397 Modi'in (IL)
(74) Representative: Jaeger, Michael David

(57) **Abstract**

An air surveillance tracker system for tracking of, typically, aerial targets, the system comprising at least one hardware processor/s (aka CCA-MHT processor) typically configured for receiving detections which may be generated by multiple sensors which may be of multiple types and/or for serially activating plural operations, which may include multi-hypothesis tracking, typically on the detections, including generating an image (aka Target Air Situation Picture (TASP)), of fused tracks wherein detections may be processed by the hardware processor one by one.

## Description

### FIELD OF THIS DISCLOSURE

The present invention relates generally to tracking, and more particularly to multi-hypothesis tracking.

### BACKGROUND FOR THIS DISCLOSURE

MHT is a general method for solving vexing problems in tracking: erroneous associations. In many conventional tracking methods, the association procedure is final. Any erroneous association may yield an erroneous direction for the appropriate track. In such cases the target may cease to be tracked. Indeed, in Multiple Target Tracking (MTT), erroneous association is, in practice, not unlikely. MHT technology was introduced 40 years ago in order to solve the problem of erroneous associations in the MTT.

Conventional technology constituting background to certain embodiments of the present invention is described in the following publications inter alia:
1. "Estimation with Applications to Tracking and Navigation", by Yaakov Bar-Shalom, X.-Rong Li, Thiagalingam Kirubarajan, John Wiley& Sons, 2001.
2. "Integrated Tracking, Classification and Sensor Management: Theory and Application", by Mahendra Mallick, Vikram Krishnamurthy, and Ba-Ngu Vo., John Wiley & Sons, 2012.
3. J.R. Werthmann, "A Step-by-Step Description of a Computationally Efficient Version of Multiple Hypothesis Tracking", SPIE Vol. 1698, Signal and Processing of Small Targets, pp. 288-300, 1992.
4. Samuel S. Blackman, " Multiple Hypothesis Tracking for Multiple Target Tracking", IEEE A&E Systems Magazine, vol. 19, No. 1, pp. 5-18, Jan. 2004.
5. Y. Bar-Shalom, S. S. Blackman and R.J. Fitzgerald, "Dimensionless Score Function for Multiple Hypothesis Tracking, IEEE Trans. Aerospace and Electronic Systems 43 (1) 392-400, January 2007.
6. Chong et al., "Efficient Multiple Hypothesis Tracking by Track Segment Graph", 12th International Conference on Information Fusion, Seattle, WA, USA, July 6-9, 2009, pp. 2177-2184.
7. James Ward, "Maximum Likelihood Angle and Velocity Estimation with Space-Time Adaptive Processing Radar", Conference on Signals, Systems and Computers, 3-6 November 1996, Pacific Grove, CA, USA, Publisher: IEEE pp. 1265- 1267, 1997.
8. Xiangdon Lin and Y. Bar-Shalom, "Multi-Sensor Target Tracking Performance with Bias Compensation", IEEE, Trans. Aerospace and Electronic Systems", 42(3) July 2006, pp. 1139 - 1149.
9. Ehsan Taghavi, Ratnasingham Tharmarasa, Thia Kirubarajan, Y. Bar-Shalom and Michael Mcdonald, "A Practical Bias Estimation Algorithm, for Multi-Sensor Multi-Target Tracking", IEEE, Trans. Aerospace and Electronic Systems", 52(1) February 2016, pp. 2 - 19.

And the following United States patents: 5,313,212 A May 17 1994 George J. Ruzicka; 5,414,643 A May 9 1995 Blackman et al; 8,437,972 A May 7 2013 Nicholas J. Ploplys et al; 8,515,881 B2 Aug. 20 2013 Stefan J. Schwoegler et al; 8,799,189 B2 Aug. 5 2014 Stefan J. Schwoegler et al; 9,291,708 B2 Mar. 22 2016 Nicholas J. Ploplys et al; and 9, 864,787 B2 Jan. 9 2018 O'Leary et al.

One way in which multiple data association hypotheses are formed is by the interacting multiple model (IMM) method.

A known function of the MHT is the likelihood ratio score function for measurement-to-track assignment.

One known approach for extended duration multiple hypothesis tracking (EDMHT) includes standard MHT and an extended duration addition including efficient representation of the long term track hypothesis by the track segment graph.

The disclosures of all publications and patent documents mentioned in the specification, and of the publications and patent documents cited therein directly or indirectly, are hereby incorporated by reference other than subject matter disclaimers or disavowals. If the incorporated material is inconsistent with the express disclosure herein, the interpretation is that the express disclosure herein describes certain embodiments, whereas the incorporated material describes other embodiments. Definition/s within the incorporated material may be regarded as one possible definition for the term/s in question.

### SUMMARY OF CERTAIN EMBODIMENTS

In the conventional MHT algorithm, the system may allow a measurement to be associated with several appropriate tracks. An existing track may be associated with several appropriate detections. In conventional systems, an existing track can be associated with only one detection, i.e. the best association. Determination of the best association typically follows only after a few more radar scans in which new detections are obtained. Then, it is determined which branch of the track is more reliable, and it is chosen as the correct track. In real cases, for MTT with Multiple Sensors (MS,) application of the MHT is typically very complicated - many detections and many tracks, with many branches. From these data the best set of tracks at any given time may be chosen. The situation becomes more complicated if, in addition, other well-known complications arise, such as bias problems, very close targets, and there are no detections for short periods for various reasons. Certain embodiments seek to provide or employ a modification of MHT, aka Structured Branching MHT (SB/MHT), which provides computational savings compared to earlier MHT approaches, enabling a greater number of hypothesized tracks, initiated in a high false alarm environment, to be maintained.

Certain embodiments seek to provide a tracker system aka CCA-MHT (Central, Cluster Aided Multi-Hypothesis Tracker), typically with bias corrections.

Certain embodiments seek to provide architectures, and processes which may operate in conjunction with the architectures, such as MHT processes and/or cluster processes configured for applying cluster tracking, and/or bias correction processes configured for computing bias corrections, with wide applicability for trackers, including, but in no way limited to, the tracker embodiments shown and described herein. For example, the architectures and processes herein may be used with any of the trackers described in "Design and Analysis of Modern Tracking Systems" by Samuel S. Blackman and Robert Popoli, Artech House, 1999.

Certain embodiments seek to provide an improved Maximum Likelihood (ML) filter relative to the conventional Maximum Likelihood (ML) filter.

Certain embodiments seek to provide an improved bias estimation method relative to conventional bias estimation methods.

Certain embodiments seek to provide a MHT system particularly suited to tracking aerial and ground targets. Typically, it is assumed that the system lacks any data related to the road location; thus the bias estimation method herein is not restricted to on-road targets.

Certain embodiments of the present invention seek to provide circuitry typically comprising at least one processor in communication with at least one memory, with instructions stored in such memory executed by the processor to provide functionalities which are described herein in detail. Any functionality described herein may be firmware-implemented or processor-implemented, as appropriate.

It is appreciated that any reference herein to, or recitation of, an operation being performed is, e.g. if the operation is performed at least partly in software, intended to include both an embodiment where the operation is performed in its entirety by a server A, and also to include any type of "outsourcing" or "cloud" embodiments in which the operation, or portions thereof, is or are performed by a remote processor P (or several such), which may be deployed off-shore or "on a cloud", and an output of the operation is then communicated to, e.g. over a suitable computer network, and used by, server A. Analogously, the remote processor P may not, itself, perform all of the operations, and, instead, the remote processor P itself may receive output/s of portion/s of the operation from yet another processor/s P', may be deployed off-shore relative to P, or "on a cloud", and so forth.

The present invention thus typically includes at least the following embodiments:
Embodiment 1: An air surveillance tracker system for tracking of aerial targets, the system comprising at least one hardware processor/s which is/are typically configured for receiving detections generated by multiple sensors which are typically of multiple types and/or for activating, typically serially, plural operations, typically including multi-hypothesis tracking, on the detections, to yield an image which may be a Target Air Situation Picture (TASP)) and may include fused tracks; typically, the detections are processed by the hardware processor one by one rather than in groups (e.g. scan groups) or batches.

Typically the aerial targets may include plural types of air entities rather than the system supporting only a single type of air entity.

Embodiment 2. A system according to any of the preceding embodiments wherein the processor/s comprises a pre-processor subsystem for pre-processing which transforms the detections into at least one common global structure of a new plot aka superplot.

Embodiment 3. A system according to any of the preceding embodiments wherein the processor/s comprises Multiple Hypothesis Tracker (MHT) logic configured to build and/or evaluate at least one track/s.

Embodiment 4. A system according to any of the preceding embodiments wherein the processor/s comprises a picture processor which builds pictures, defines a list of best legitimate pictures, based upon a current track store, and selects from the list a best most appropriate picture to be outputted.

Embodiment 5. A system according to any of the preceding embodiments wherein the processor/s comprises a Bias computation unit which computes bias errors of at least one of the multiple sensors.

Embodiment 6. A system according to any of the preceding embodiments wherein the processor/s comprises a tracks segments links computer which links two compatible tracks segments into a single track.

Embodiment 7. A system according to any of the preceding embodiments and wherein the processor/s also comprises a cluster tracker which forms clusters from at least one existing MHT track/s.

Embodiment 8. A system according to according to any of the preceding embodiments wherein the processor/s comprises a maintenance process which repeatedly maintains the system's elements.

Embodiment 9. A system according to according to any of the preceding embodiments wherein the multiple types of sensors include at least two of the following types of sensors: Aerial Radar Sensors, IFF, LDN (Linked Data Network), Sigint systems, Optics systems, Communication Systems.

Embodiment 10. A system according to any of the preceding embodiments wherein the detections are time sorted and are treated serially (one by one) in order of time.

Embodiment 11. A system according to according to any of the preceding embodiments wherein the pre-processor subsystem generates a superplot serving as a common input structure for detections of plural sensor types, characterized in that locations and errors of all inputs from all sensor types, all reside in the same coordinate system, thereby to facilitate reliable, consistent generation and updating of tracks.

Embodiment 12. A system according to according to any of the preceding embodiments wherein the processor supports situations in which detections from at least one of the plural types of sensors include less than all of plural data types defined in the superplots.

Embodiment 13. A system according to according to any of the preceding embodiments wherein the Multiple Hypothesis Tracker (MHT) logic is configured to perform all or any subset of: correlation, track updating, and ambiguity tree updating.

Embodiment 14. A system according to according to any of the preceding embodiments wherein at least one pruning process is performed, including deleting at least one track found to belong to an old generation, based on a layer number.

Embodiment 15. A system according to any of the preceding embodiments wherein at least one pruning process is performed, including deleting all but top scoring associations from among plural associations which are valid for a newly arrived detection, such that only the top scored associations construct tracks and all other associations are deleted.

Embodiment 16. A system according to according to any of the preceding embodiments wherein the Multiple Hypothesis Tracker (MHT) logic is configured to use tactical and kinematical data to enhance gating and/or ambiguity resolution.

Embodiment 17. A system according to according to any of the preceding embodiments wherein the Multiple Hypothesis Tracker (MHT) logic is configured to enable each single track to be composed of detections from different types of sensors, which update the track state serially.

Embodiment 18. A system according to according to any of the preceding embodiments wherein the Multiple Hypothesis Tracker (MHT) logic is configured to generate plural alternative hypotheses as part of an ambiguity tree where each hypothesis comprises a logical track rather than a picture, thereby to yield track-oriented the Multiple Hypothesis Tracker (MHT) logic.

Embodiment 19. A system according to according to any of the preceding embodiments wherein the Multiple Hypothesis Tracker (MHT) logic is configured to generate at least one list of exclusions between hypotheses on the basis of associations that are generated.

Embodiment 20. A system according to according to any of the preceding embodiments wherein the Multiple Hypothesis Tracker (MHT) logic is configured to assign a layer (generation) number to existing tracks.

Embodiment 21. A system according to according to any of the preceding embodiments wherein the layer number assigned to the existing tracks allows correlation of detection only to a small group of the existing tracks to be checked.

Embodiment 22. A system according to any of the preceding embodiments and also comprising a picture processor which builds pictures and wherein the processor which builds pictures is independent from the Multiple Hypothesis Tracker (MHT) logic.

Embodiment 23. A system according to any of the preceding embodiments wherein the picture processor is activated, e.g. upon user request, after less than all time interval terminations, thereby to allow more track state hypotheses to be stored, by reducing complexity.

Embodiment 24. A system according to according to any of the preceding embodiments wherein the picture processor defines picture scores as a function of scores of tracks which resides at or are included in the picture.

Embodiment 25. A system according to according to any of the preceding embodiments wherein the picture processor wherein a list of best pictures, whose scores are best according to a bestness criterion, is generated, without constructing all possible pictures, thereby to ensure that an exhaustive search over all possible pictures is not required.

Embodiment 26. A system according to any of the preceding embodiments wherein the list is constructed after a partition into independent groups of ambiguities, thereby to enable separate processing for each group of ambiguities by reducing complexity.

Embodiment 27. A system according to any of the preceding embodiments wherein selection of the best most appropriate picture to be outputted includes comparison of the list, to at least one previously outputted picture stored in a database, and selecting a final best picture from the list which best avoids at least one of jumps in track's position and jumps in track's velocity.

Embodiment 28. A system according to any of the preceding embodiments wherein the bias computation unit computes bias registration by computing and cancelling bias between the multiple sensors thereby to enhance tracking accuracy of targets based on the multiple sensors.

Embodiment 29. A system according to any of the preceding embodiments which at least once prepares a first list of the last deleted tracks and a second list of new tracks and wherein a score for links between each deleted track and each new track is computed (aka candidate pair scores) and, best links for presentation by a presentation center are extracted accordingly.

Embodiment 30. A system according to any of the preceding embodiments which continuously prepares the first list of last deleted tracks and the second list of new tracks.

Embodiment 31. A system according to any of the preceding embodiments wherein the cluster tracker aggregates plural tracks formed by the Multiple Hypothesis Tracker logic into a cluster track, thereby to represent a formation of close flying targets.

Embodiment 32. A system according to any of the preceding embodiments and wherein a smooth state vector of the cluster track is computed in which all members of the cluster track inherit a uniform smoothed velocity value.

Embodiment 33. A system according to any of the preceding embodiments wherein the processor also comprises a Bias computation unit which corrects bias using a bias correction process which computes bias errors of at least one of the multiple sensors and determines a bias input to the multi-hypothesis tracking (aka main process) wherein cluster tracker properties are integrated into the bias correction process.

Embodiment 34. A system according to any of the preceding embodiments wherein the Multiple Hypothesis Tracker (MHT) logic is configured to perform ambiguity tree updating and wherein the Multiple Hypothesis Tracker (MHT) logic maintains at least one ambiguity tree by repeatedly running a maintenance process in which hypotheses are pruned including deletion of non-relevant hypotheses.

Embodiment 35. A system according to any of the preceding embodiments wherein tracks are created, updated, or pruned (deleted) and wherein each outputted picture outputted at a time t is built based on an ambiguity tree which is current at the time t, thereby to yield track-oriented Multiple Hypothesis Tracking.

Embodiment 36. A system according to any of the preceding embodiments wherein the Multiple Hypothesis Tracker (MHT) logic is configured to perform correlation.

Embodiment 37. A system according to any of the preceding embodiments wherein the Multiple Hypothesis Tracker (MHT) logic is configured to perform track updating.

Embodiment 38. An air surveillance method for tracking of aerial targets, the method comprising: providing at least one hardware processor/s (aka CCA-MHT processor) configured for receiving detections generated by multiple sensors of multiple types and for serially activating plural operations, including multi-hypothesis tracking, on the detections to yield an image (aka Target Air Situation Picture (TASP)), of fused tracks, wherein the detections are processed by the hardware processor, one by one.Embodiment 39. A computer program product, comprising a non-transitory tangible computer readable medium having computer readable program code embodied therein, the computer readable program code adapted to be executed to implement an air surveillance method for tracking of aerial targets, the method comprising:
providing at least one hardware processor/s (aka CCA-MHT processor) configured for receiving detections generated by multiple sensors of multiple types and for serially activating plural operations, including multi-hypothesis tracking, on the detections to yield an image (aka Target Air Situation Picture (TASP)), of fused tracks,
wherein the detections are processed by the hardware processor, one by one.Also provided, excluding signals, is a computer program comprising computer program code means for performing any of the methods shown and described herein when the program is run on at least one computer; and a computer program product, comprising a typically non-transitory computer-usable or -readable medium e.g. non-transitory computer -usable or -readable storage medium, typically tangible, having a computer readable program code embodied therein, the computer readable program code adapted to be executed to implement any or all of the methods shown and described herein. The operations in accordance with the teachings herein may be performed by at least one computer specially constructed for the desired purposes, or a general purpose computer specially configured for the desired purpose by at least one computer program stored in a typically non-transitory computer readable storage medium. The term "non-transitory" is used herein to exclude transitory, propagating signals or waves, but to otherwise include any volatile or non-volatile computer memory technology suitable to the application.

Any suitable processor/s, display and input means may be used to process, display e.g. on a computer screen or other computer output device, store, and accept information such as information used by or generated by any of the methods and apparatus shown and described herein; the above processor/s, display and input means including computer programs, in accordance with all or any subset of the embodiments of the present invention. Any or all functionalities of the invention shown and described herein, such as but not limited to operations within flowcharts, may be performed by any one or more of: at least one conventional personal computer processor, workstation or other programmable device or computer or electronic computing device or processor, either general-purpose or specifically constructed, used for processing; a computer display screen and/or printer and/or speaker for displaying; machine-readable memory such as flash drives, optical disks, CDROMs, DVDs, BluRays, magnetic-optical discs or other discs; RAMs, ROMs, EPROMs, EEPROMs, magnetic or optical or other cards, for storing, and keyboard or mouse for accepting. Modules illustrated and described herein may include any one or combination or plurality of: a server, a data processor, a memory/computer storage, a communication interface (wireless (e.g. BLE) or wired (e.g. USB)), a computer program stored in memory/computer storage.

The term "process" as used above is intended to include any type of computation or manipulation or transformation of data represented as physical, e.g. electronic, phenomena which may occur or reside e.g. within registers and /or memories of at least one computer or processor. Use of nouns in singular form is not intended to be limiting; thus the term processor is intended to include a plurality of processing units which may be distributed or remote, the term server is intended to include plural typically interconnected modules running on plural respective servers, and so forth.

The above devices may communicate via any conventional wired or wireless digital communication means, e.g. via a wired or cellular telephone network or a computer network such as the Internet.

The apparatus of the present invention may include, according to certain embodiments of the invention, machine readable memory containing or otherwise storing a program of instructions which, when executed by the machine, implements all or any subset of the apparatus, methods, features and functionalities of the invention shown and described herein. Alternatively or in addition, the apparatus of the present invention may include, according to certain embodiments of the invention, a program as above which may be written in any conventional programming language, and optionally a machine for executing the program such as but not limited to a general purpose computer which may optionally be configured or activated in accordance with the teachings of the present invention. Any of the teachings incorporated herein may, wherever suitable, operate on signals representative of physical objects or substances.

The embodiments referred to above, and other embodiments, are described in detail in the next section.

Any trademark occurring in the text or drawings is the property of its owner and occurs herein merely to explain or illustrate one example of how an embodiment of the invention may be implemented.

Unless stated otherwise, terms such as, "processing", "computing", "estimating", "selecting", "ranking", "grading", "calculating", "determining", "generating", "reassessing", "classifying", "generating", "producing", "stereo-matching", "registering", "detecting", "associating", "superimposing", "obtaining", "providing", "accessing", "setting" or the like, refer to the action and/or processes of at least one computer/s or computing system/s, or processor/s or similar electronic computing device/s or circuitry, that manipulate and/or transform data which may be represented as physical, such as electronic, quantities e.g. within the computing system's registers and/or memories, and/or may be provided on-the-fly, into other data which may be similarly represented as physical quantities within the computing system's memories, registers or other such information storage, transmission or display devices or may be provided to external factors e.g. via a suitable data network. The term "computer" should be broadly construed to cover any kind of electronic device with data processing capabilities, including, by way of non-limiting example, personal computers, servers, embedded cores, computing system, communication devices, processors (e.g. digital signal processor (DSP), microcontrollers, field programmable gate array (FPGA), application specific integrated circuit (ASIC), etc.) and other electronic computing devices. Any reference to a computer, controller or processor is intended to include one or more hardware devices e.g. chips, which may be co-located or remote from one another. Any controller or processor may, for example comprise at least one CPU, DSP, FPGA or ASIC, suitably configured in accordance with the logic and functionalities described herein.

Any feature or logic or functionality described herein may be implemented by processor/s or controller/s configured as per the described feature or logic or functionality, even if the processor/s or controller/s are not specifically illustrated for simplicity. The controller or processor may be implemented in hardware, e.g., using one or more Application-Specific Integrated Circuits (ASICs) or Field-Programmable Gate Arrays (FPGAs) or may comprise a microprocessor that runs suitable software, or a combination of hardware and software elements.

The present invention may be described, merely for clarity, in terms of terminology specific to, or references to, particular programming languages, operating systems, browsers, system versions, individual products, protocols and the like. It will be appreciated that this terminology or such reference/s is intended to convey general principles of operation clearly and briefly, by way of example, and is not intended to limit the scope of the invention solely to a particular programming language, operating system, browser, system version, or individual product or protocol. Nonetheless, the disclosure of the standard or other professional literature defining the programming language, operating system, browser, system version, or individual product or protocol in question, is incorporated by reference herein in its entirety.

Elements separately listed herein need not be distinct components and alternatively may be the same structure. A statement that an element or feature may exist is intended to include (a) embodiments in which the element or feature exists; (b) embodiments in which the element or feature does not exist; and (c) embodiments in which the element or feature exist selectably e.g. a user may configure or select whether the element or feature does or does not exist.

Any suitable input device, such as but not limited to a sensor, may be used to generate or otherwise provide information received by the apparatus and methods shown and described herein. Any suitable output device or display may be used to display or output information generated by the apparatus and methods shown and described herein. Any suitable processor/s may be employed to compute or generate or route, or otherwise manipulate or process information as described herein and/or to perform functionalities described herein and/or to implement any engine, interface or other system illustrated or described herein. Any suitable computerized data storage e.g. computer memory may be used to store information received by or generated by the systems shown and described herein. Functionalities shown and described herein may be divided between a server computer and a plurality of client computers. These or any other computerized components shown and described herein may communicate between themselves via a suitable computer network.

The system shown and described herein may include user interface/s e.g. as described herein which may for example include all or any subset of: an interactive voice response interface, automated response tool, speech-to-text transcription system, automated digital or electronic interface having interactive visual components, web portal, visual interface loaded as web page/s or screen/s from server/s via communication network/s to a web browser or other application downloaded onto a user's device, automated speech-to-text conversion tool, including a front-end interface portion thereof and back-end logic interacting therewith. Thus the term user interface or "UI" as used herein includes also the underlying logic which controls the data presented to the user e.g. by the system display and receives and processes and/or provides to other modules herein, data entered by a user e.g. using her or his workstation/device.

### BRIEF DESCRIPTION OF THE DRAWINGS

Example embodiments are illustrated in the various drawings. Specifically:

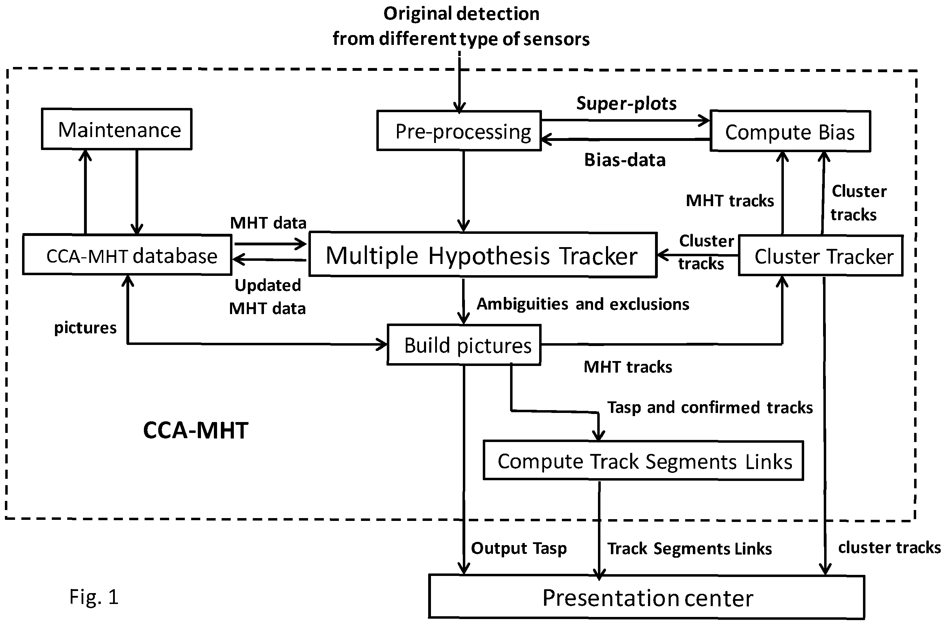

Fig. 1 illustrates the general architecture of the CCA -MHT method. Each block presents one function of the method. Functions, links and the data flow between the functions are presented; all or any subset of what is illustrated may, in practice, be provided. Operations that may be applied from the start, i.e. obtaining the original detection until the end and presentation of the tracks, are shown.

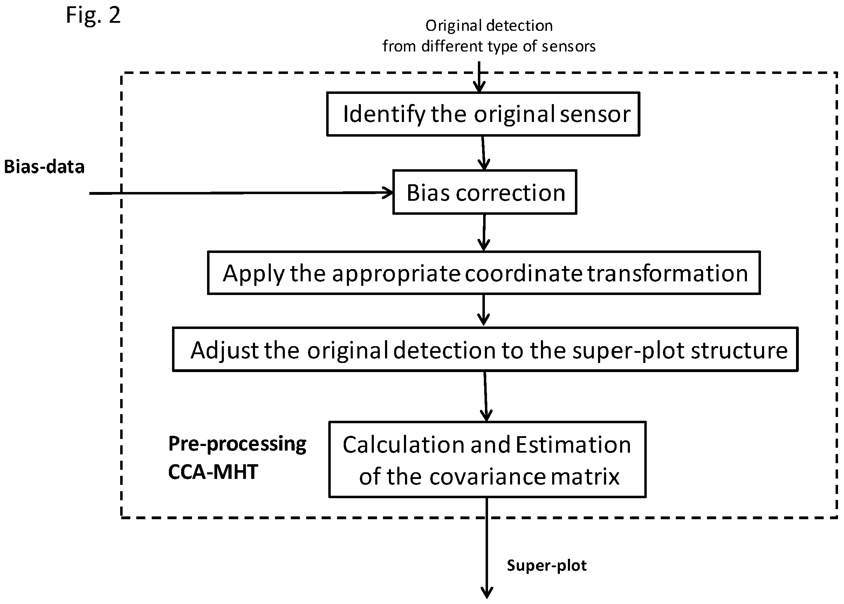

Fig. 2 schematically illustrates various operations, all or any subset of which may be performed by the pre-processing CCA-MHT. The input data might be any detection from the available various sensors, such as radar and IFF (Identification of Friends or Foe). Firstly, location of the new detection by using the bias-data, is determined. Operations may be performed which transform the detection to the superplot structure. Finally, the input errors, or an estimation of the input errors, are computed in order to derive the covariance matrix in the common coordinate systems.

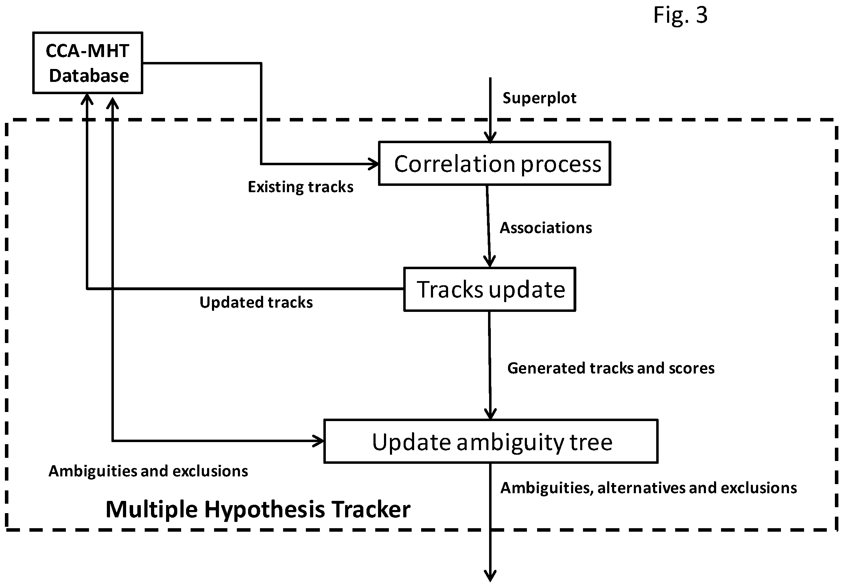

Fig. 3 illustrates a modified MHT tracker according to certain embodiments. Starting from a given superplot, correlation with a subgroup of the existing tracks is checked, indicating the tracks with a correlation likelihood above a given threshold. Each such track makes an association and is given a track score. Also, the track's list of exclusions, which defines a list of tracks that cannot coexist in the same picture with the given track, are constructed. Finally, an ambiguity tree is updated by the list of chosen associations that have been defined for the current superplot.

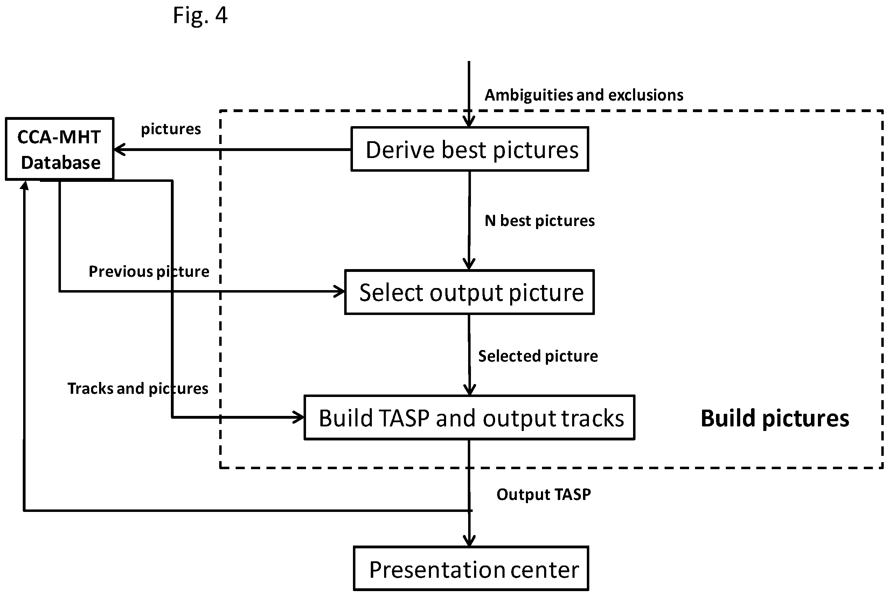

Fig. 4 illustrates a method, according to certain embodiments, for choosing the best picture to be outputted to the user. First, a predefined number of best available pictures are derived, based on the ambiguities and exclusions obtained in the previous stages. In the next operation, these best pictures are compared to the picture outputted in the previous dissemination interval, and it is decided which one of them may be selected and outputted in the current interval. In the last operation, the status and state of each track contained in the selected picture is updated.

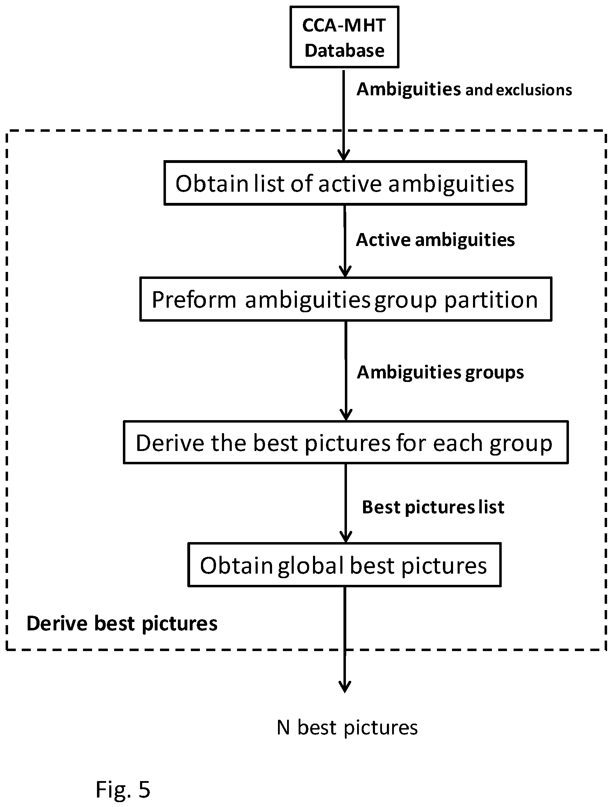

Fig. 5 illustrates an example implementation for the first block in Fig. 4. The functions that form the best pictures derivation process are presented. The first function prepares the list of active ambiguities. In the next operation this list is divided into subgroups, subject to the exclusion list. In each group a number of best pictures are derived, and a unified list of best pictures is thus obtained.

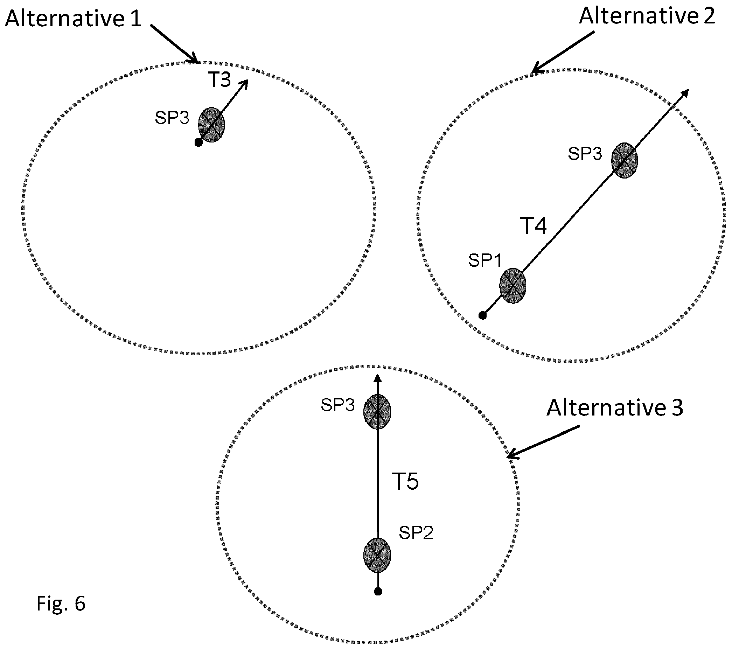

Fig. 6 illustrates an example of constructing three alternatives from a new super-plot (SP), designated as number 3. It may be assumed that two tracks with one SP already exist. The new SP can start a new track (alternative 1), or assign and connect to SP1 (alternative 2), or assign and connect to SP2 (alternative 3).

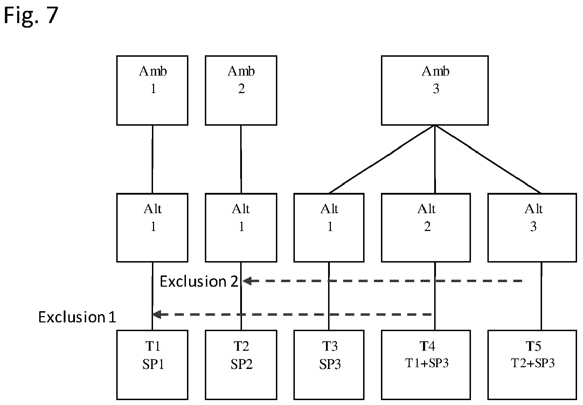

Fig. 7 illustrates an example of three ambiguities with their appropriate exclusion lists. In this schematic diagram it may be seen that SP 1 has only one alternative (it starts a new track T1) and also SP2 has only one alternative (it starts a new track T2). However, SP3 (with ambiguity 3) has three alternatives - a new track T3, a connection to T1 which yields the track T4, and the exclusion list which consists of T1 only, and a connection to T2 which yields the track T5, and the exclusion list which consists of T2 only.

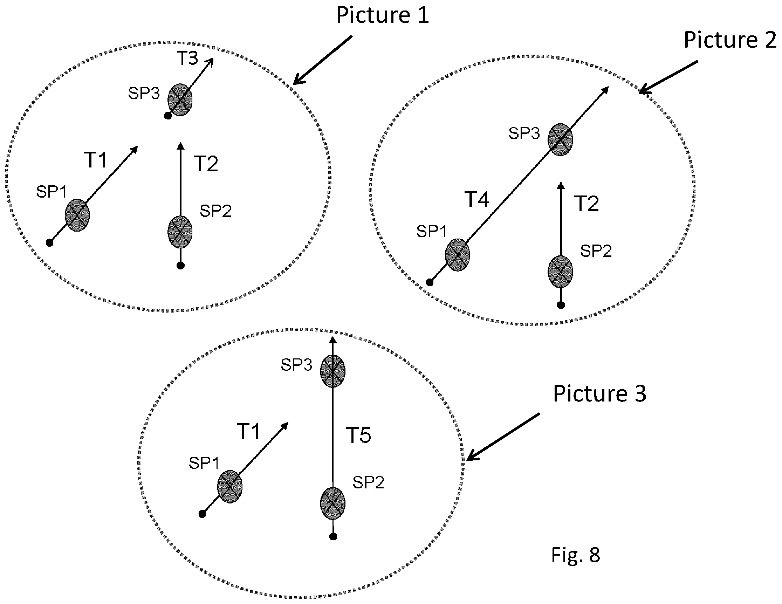

Fig. 8 illustrates an example of three pictures of tracks for a case of three targets - SP1, SP2 and SP3. In picture 1 there are 3 new tracks - T1, T2, and T3. In picture 2 there are two tracks, T4 from SP1 and SP3, and T2 from SP2. In picture 3 there are also two tracks, T1 from SP1 and T5 from SP2 and SP3.

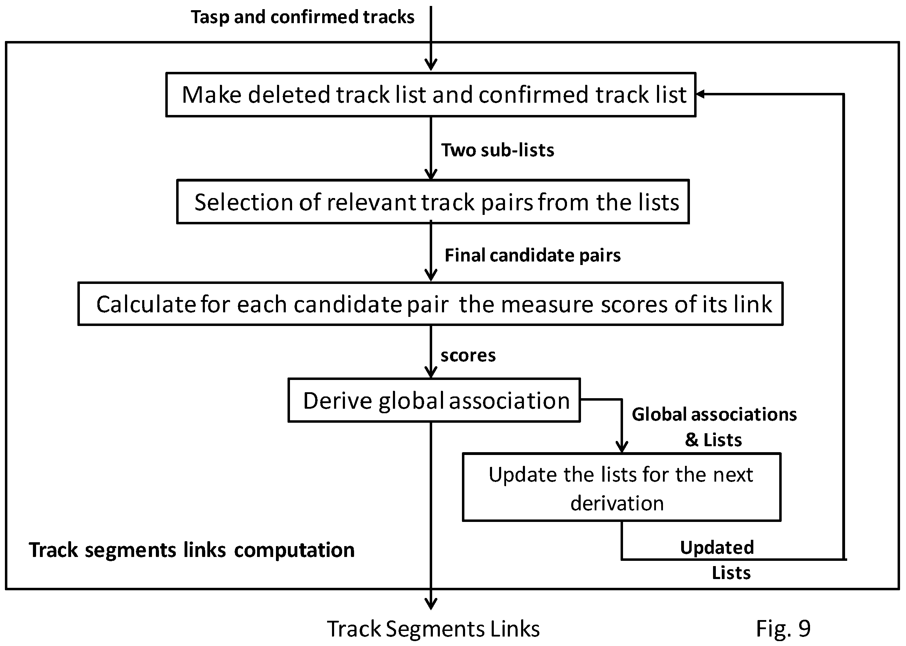

Fig. 9 is a simplified flowchart illustration of a method for track segment links computation. The first operation is to prepare a list of the last deleted tracks, and a list of the new confirmed tracks. The two lists are transformed to the second operation, in which, according to some rules, the relevant tracks from the two lists are selected. Then, in the next operation the link score for each candidate pair of a new and a deleted track is selected. Then, all the scores are computed/collected, and the best links are extracted by applying an appropriate global assignment procedure. In addition, the original two lists are updated by omitting the tracks that were given an assignment.

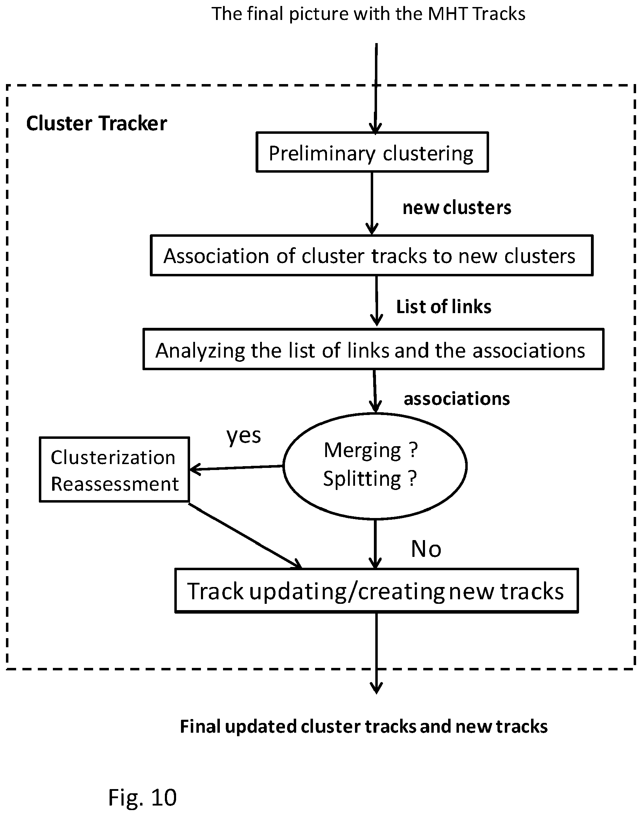

Fig. 10 is a simplified flowchart illustration of a bias computation method according to certain embodiments. The relative bias between the detections of two sensors is computed. Starting from the superplots resulting from the detections of the two sensors, all these superplots may be extrapolated to a common time - typically, but not necessarily, the last time of the late sensor. Then, an appropriate global assignment procedure is applied several times, until the assignment is adequate, using any suitable use-case appropriate criteria for adequacy. If inadequate, erroneous associations may be removed. Upon obtaining the final correct associations, the optimal bias values may be determined.

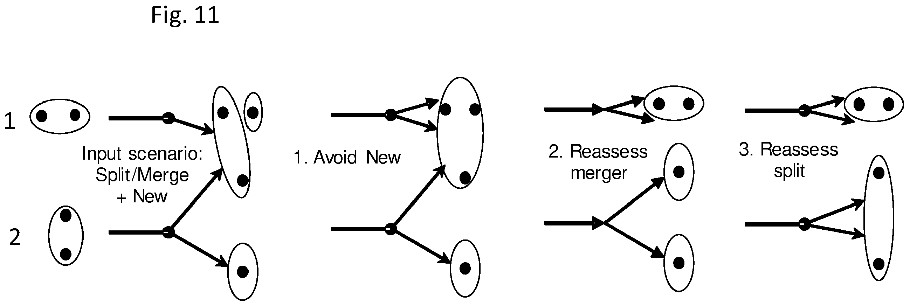

Fig. 11 schematically illustrates a method of operation for the cluster tracker, which is included in the system presented (see Fig. 1). The first operation receives the final MHT tracks. The new preliminary clustering procedure is applied, and the newly created clusters and the previous cluster tracks are output. The second operation receives these data and applies an assignment procedure between the new clusters and the previous cluster tracks. Then, the clusterization reassessment procedure may, e.g. if needed, be applied in order to avoid breaking existing cluster tracks. Finally, the cluster tracks are updated, and the updated cluster tracks are output.
Fig. 11 illustrates an example of the application of the reassessment procedure for a case of split and merge. In this example the three sub procedures of the main procedure are applied. An "avoid new" sub-procedure may (e.g. first) be applied, a "reassess merger" sub-procedure may (e.g. subsequently) be applied, and a "reassess split sub-structure" may (e.g. subsequently) be applied. In this example, split and merge cases are firstly obtained, following which these cases are cancelled.

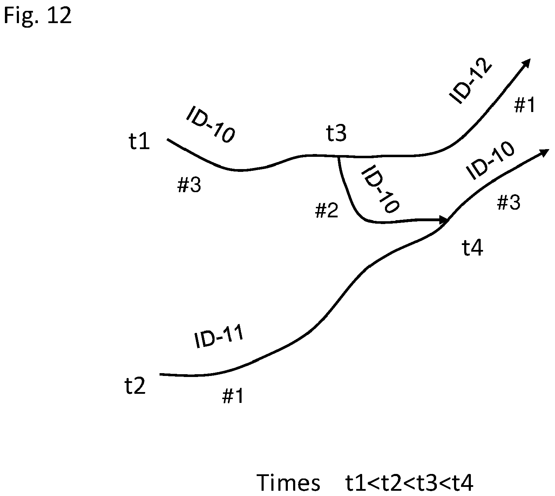

Fig. 12 illustrates an example of keeping the ID number of cluster tracks. In this example one begins from a cluster track that starts at time t1 with ID 10 and three targets, and then at time t3 is split into two cluster tracks. One cluster track may still keep the ID 10, since it includes two targets (out of three) where the other cluster track includes only one target, and therefore it receives a new ID 12. At time t4 the cluster track with ID 11 and one target merge with the cluster track with ID 10 and 2 targets. Therefore, the ID of the cluster track after merging will remain 10.

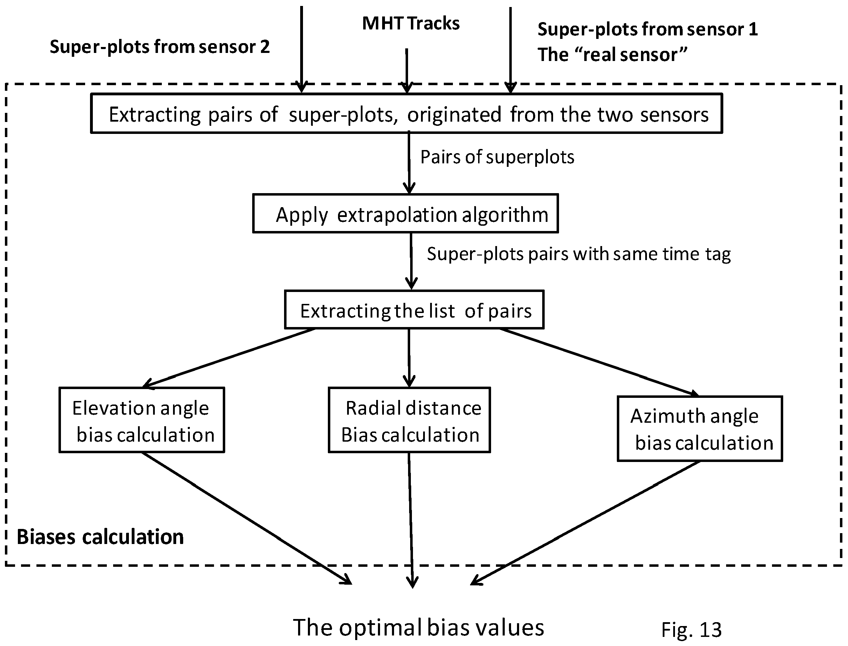

Fig. 13 illustrates a general structure of the procedure for computing the bias for two sensors in the CCA-MHT architecture. In this structure pairs of superplots from two different sensors are built. Then the extrapolation process is applied for each pair, in order to get pairs of super-plots with the same time tag. It is then possible to compute the three biases separately.

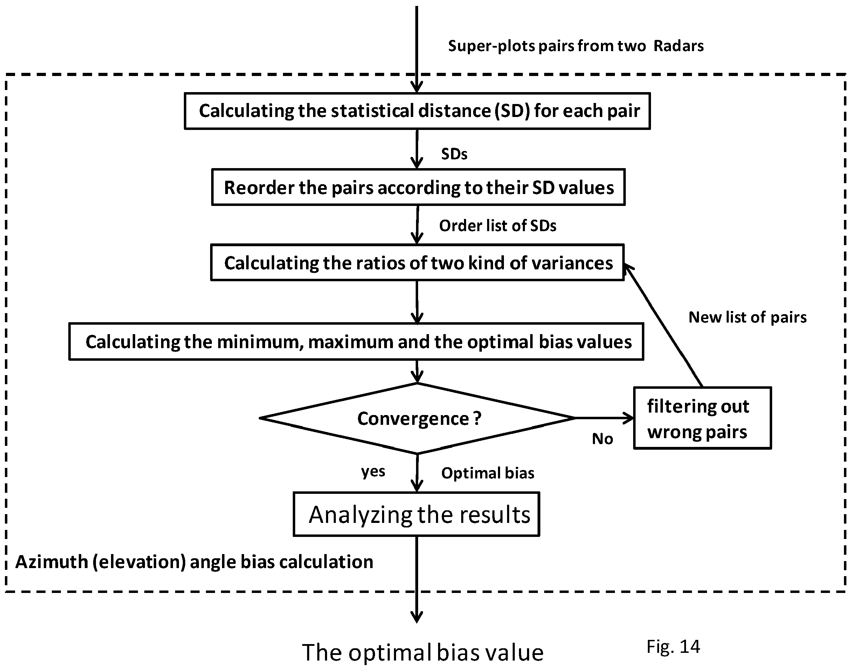

Fig. 14 illustrates a general structure for computing one relative bias value. It may be assumed that a list of super-plot pairs from two radars already exists. The statistical distance (SD) between each pair of super-plots may be computed as a first function. Then the list of pairs according to their SD values are re-ordered, and the values of the ratio of two variances for each sub-list of the ordered SD values are computed, following which this function is plotted. Then an iteration procedure begins, where, in each operation, the minimum, maximum and the optimal bias values are computed. The convergence of the optimal bias value is checked. If it does not meet requirements, which may be use-case specific, erroneous pairs are filtered out and the iteration process is repeated. If it is found to meet requirements, the results and output the bias value are analyzed.

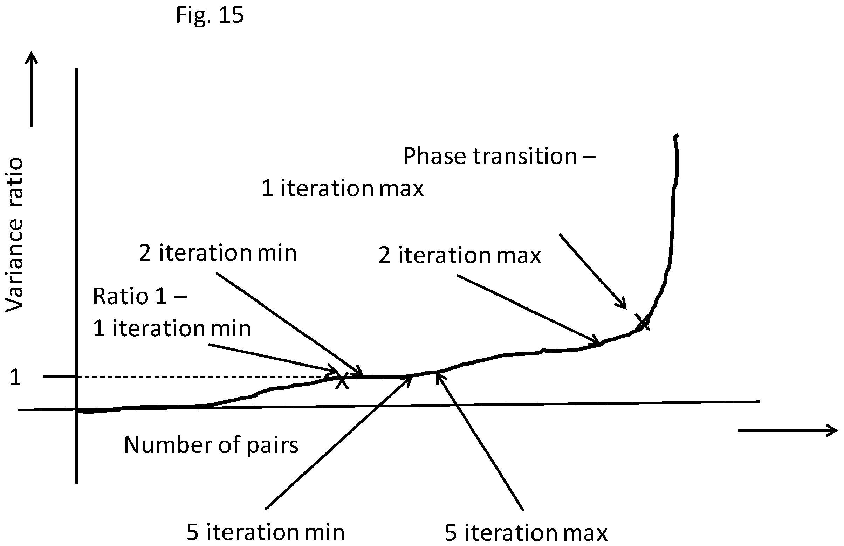

Fig. 15 illustrates behavior of the variance ratio function. The minimum point of the first iteration (where the variance ratio is 1) and the maximum point of the first iteration (phase transition point) may be assigned. The minimum and maximum points for the second and fifth iteration are also assigned. This illustrates the proceeding of the convergence process.

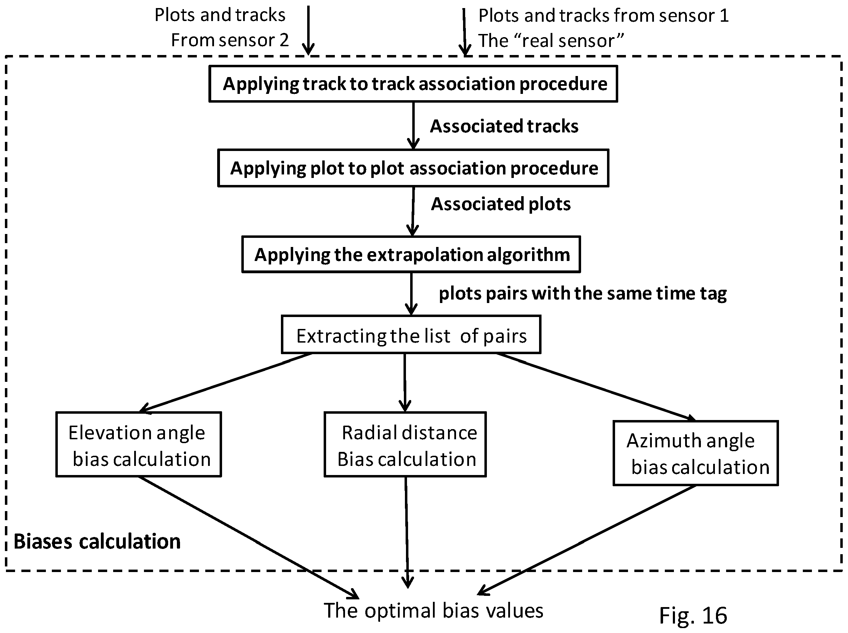

Fig. 16 illustrates the structure for computing the biases for two sensors in the general architecture, where each sensor has its own tracker. In this case the track to track association procedure is firstly applied - between the tracks of sensor 1 and the tracks of sensor 2. Then the plot to plot association procedure is applied between the associated tracks. The same procedure may then proceed, as previously applied for the CCA-MHT, e.g. as presented in Fig. 13.

Certain embodiments of the present invention are illustrated in the drawings; in the block diagrams, arrows between modules may be implemented as APIs and any suitable technology may be used for interconnecting functional components or modules illustrated herein in a suitable sequence or order e.g. via a suitable API/Interface. For example, state of the art tools may be employed, such as but not limited to Apache Thrift and Avro which provide remote call support. Or, a standard communication protocol may be employed, such as but not limited to HTTP or MQTT, and may be combined with a standard data format, such as but not limited to JSON or XML.

Methods and systems included in the scope of the present invention may include any subset or all of the functional blocks shown in the specifically illustrated implementations by way of example, in any suitable order e.g. as shown. Flows may include all or any subset of the illustrated operations, suitably ordered e.g. as shown. tables herein may include all or any subset of the fields and/or records and/or cells and/or rows and/or columns described.

Computational, functional or logical components described and illustrated herein can be implemented in various forms, for example, as hardware circuits such as but not limited to custom VLSI circuits or gate arrays or programmable hardware devices such as but not limited to FPGAs, or as software program code stored on at least one tangible or intangible computer readable medium and executable by at least one processor, or any suitable combination thereof. A specific functional component may be formed by one particular sequence of software code, or by a plurality of such, which collectively act or behave or act as described herein with reference to the functional component in question. For example, the component may be distributed over plural code sequences such as but not limited to objects, procedures, functions, routines and programs, and may originate from plural computer files which typically operate synergistically.

Each functionality or method herein may be implemented in software (e.g. for execution on suitable processing hardware such as a microprocessor or digital signal processor), firmware, hardware (using any conventional hardware technology such as Integrated Circuit technology), or any combination thereof.

Functionality or operations stipulated as being software-implemented may alternatively be wholly or fully implemented by an equivalent hardware or firmware module, and vice-versa. Firmware implementing functionality described herein, if provided, may be held in any suitable memory device and a suitable processing unit (aka processor) may be configured for executing firmware code. Alternatively, certain embodiments described herein may be implemented partly or exclusively in hardware, in which case all or any subset of the variables, parameters, and computations described herein may be in hardware.

Any module or functionality described herein may comprise a suitably configured hardware component or circuitry. Alternatively or in addition, modules or functionality described herein may be performed by a general purpose computer, or more generally by a suitable microprocessor, configured in accordance with methods shown and described herein, or any suitable subset, in any suitable order, of the operations included in such methods, or in accordance with methods known in the art.

Any logical functionality described herein may be implemented as a real time application, if and as appropriate, and which may employ any suitable architectural option such as but not limited to FPGA, ASIC or DSP or any suitable combination thereof.

Any hardware component mentioned herein may in fact include either one or more hardware devices e.g. chips, which may be co-located or remote from one another.

Any method described herein is intended to include within the scope of the embodiments of the present invention also any software or computer program performing all or any subset of the method's operations, including a mobile application, platform or operating system e.g. as stored in a medium, as well as combining the computer program with a hardware device to perform all or any subset of the operations of the method.

Data can be stored on one or more tangible or intangible computer readable media stored at one or more different locations, different network nodes, or different storage devices at a single node or location.

It is appreciated that any computer data storage technology, including any type of storage or memory and any type of computer components and recording media that retain digital data used for computing for an interval of time, and any type of information retention technology, may be used to store the various data provided and employed herein. Suitable computer data storage or information retention apparatus may include apparatus which is primary, secondary, tertiary or off-line; which is of any type or level or amount or category of volatility, differentiation, mutability, accessibility, addressability, capacity, performance and energy use, and which is based on any suitable technologies such as semiconductor, magnetic, optical, paper, and others.

### DETAILED DESCRIPTION OF CERTAIN EMBODIMENTS

An improved architecture and method for Multiple Hypothesis Tracking (MHT) are now described. These may include all or any subset of the following applications or functionalities: bias corrections, cluster tracking and track segment links, each e.g. as described herein.

Fig. 1 presents a simplified general architecture of the CCA (center-cluster-aided)-MHT method. Each block presents one function of the method. Functions, links, and data flow between the functions, are presented, all or any subset of which may in fact be provided. The figure presents operations, all or any subset of which may be applied or performed, from obtaining the original detection until presentation of the tracks.

More generally, the MHT (Multi-Hypothesis Tracker) is provided in accordance with certain embodiments. In this tracker version, plural alternatives of association to existing tracks are computed for a new detection, including a new track creation with the new detection. The MHT computes the scores of each association and omits the least probable associations, i.e. those deemed unlikely to be correct. The MHT is configured to allow postponing final association decisions, while maintaining plural typically reasonable alternatives. This enables selecting the most probable associations within a given time.

An improved MHT architecture, and processes useful in conjunction therewith, are presented. The system herein may also include a cluster tracker, and may therefore be termed a CCAMHT (Central Cluster Aided Multi-Hypothesis Tracker). Methods useful in conjunction with the CCA-MHT are described herein e.g. methods for bias corrections and links between deleted tracks and new tracks (track segment links).

Such a CCA-MHT may be tasked with generating a Target Air Situation Picture (TASP) based on the fusion of multiple sensor inputs into combined tracks. The CCA-MHT may also be used with other systems with multiple sensors.

Fig. 1 presents the new general architecture of the CCA-MHT. The main blocks include a pre-processing unit, a Multiple Hypothesis Tracker, build pictures unit, bias computation unit, tracks segment links computer, cluster tracker, maintenance process, and a CCA-MHT database. Each block presents one function of the method.

A wide variety of sensors, including any suitable known sensor (such as radar, Iff, etc.), may stream data (detections) to the system. Such data typically includes kinematical and/or tactical information on the observed target. Each of the sensors possesses its own intrinsic observation errors.

Fig. 2 presents, schematically, the various operations of the pre-processing CCA-MHT. The input data might be any detection from the available various sensors, such as radar and IFF (Identification of Friend or Foe). Firstly, location of the new detection is enhanced by using the bias-data. Following this are certain operations that transform the detection to a superplot structure. As a final operation, the input errors, or estimates of the input errors, may be used to derive the covariance matrix in the common coordinate systems.

The term "super-plot" as used herein is intended to include any representation e.g. plot which includes or presents data from plural types of sensors rather than from just one single type of sensor, typically using a single coordinate system. Sensor data from each of the plural types of sensors is processed, if and as necessary, to allow that data to be incorporated into the super-plot e.g. by converting the coordinate system in which sensor data may be expressed, to the coordinate system of the superplot.

Fig. 3 presents functions of a MHT tracker according to certain embodiments. Starting from a given superplot (SP), correlation with a subgroup of the existing tracks is examined, and tracks with correlation likelihood above a given threshold are then derived. An association is made between each such track and the given superplot, SP. Each such track, after association, may be updated, and its track score may be computed. Also, the track's list of exclusions, which defines a list of tracks that cannot coexist in the same picture with the given track, are constructed. Finally, the ambiguity tree is updated by the list of chosen associations that were defined for the current superplot.

Fig. 4 presents a method for choosing the best picture to be outputted to the user. First, a predefined number of best available pictures are extracted, based on the ambiguities and exclusions obtained in the previous stages. In the next operation, the best pictures are compared to the picture outputted in the previous dissemination interval, and a decision is made with regard to which of them will be selected and outputted in the current interval. In the final operation the status and state of each track contained in the selected picture is updated.

Fig. 5 relates to the first block in Fig. 4. Here the functions that form the best pictures derivation process are presented. The first function prepares the list of active ambiguities. In the next operation this list is divided into subgroups, subject to the exclusion list. In each subgroup a number of best pictures are derived, and thus a unified list of best pictures is obtained.

Fig. 6 illustrates an example of constructing three alternatives from a new super-plot (SP) number 3. Assume that there are two tracks with one SP. The new SP can start a new track (alternative 1), or assign and connect to SP1 (alternative 2), or assign and connect to SP2 (alternative 3).

Fig. 7 illustrates an example of three ambiguities with their appropriate exclusion lists. In this schematic diagram it may be seen that Superplot SP1 has only one alternative (it starts a new track T1) and also Superplot SP2 has only one alternative (it starts a new track T2). However, Superplot SP3 (with ambiguity 3) has three alternatives - a new track T3, a connection to T1 which yields the track T4, and the exclusion list which consists of T1 only, and a connection to T2, which yields the track T5, and the exclusion list which consists of T2 only.

Fig. 8 illustrates an example of three pictures of tracks for a case of three targets - Superplot SP1, Superplot SP2, and Superplot SP3. In picture 1 there are 3 new tracks-T1, T2 and T3. In picture 2 there are two tracks, T4 from Superplot SP1 and Superplot SP3, and T2 from Superplot SP2. In picture 3 there are also two tracks, T1 from Superplot SP1 and T5 from Superplot SP2 and Superplot SP3.

Fig. 9 presents a method for track segment links computation. The first operation is to prepare a list of the last deleted tracks and a list of the new confirmed tracks. The two lists are transformed to the second operation in which, according to some rules, the relevant tracks are selected from the two lists. For example, a pair of tracks may be selected if the velocity of the two tracks is similar (or is close by) and if the distance between the two tracks is more or less equal to the velocity times the elapsed time between the pair of the states, e.g. as described below. Then, in the next operation, the link score for each candidate pair of a new and a deleted track is selected. Finally, all the scores are collected, and the best links are extracted by applying an appropriate global assignment procedure. In addition, the original two lists are updated by omitting those tracks that got an assignment.

Fig. 10 presents a bias computation method in which relative bias between the detections of two sensors is computed. Starting from the superplots resulting from the detections of the two sensors, it is sought to extrapolate all these superplots to a common time, typically, but not necessarily, the last time of the late sensor. Then an appropriate global assignment procedure is applied plural times, until the assignment is adequate using any, typically use-case specific, criterion of adequacy. If not, the associations which are likely to be incorrect, are removed. After obtaining the final correct associations, it is possible to determine the optimal bias values.

Fig. 10 illustrates an example of the application of the reassessment procedure for a case of split and merge. In this example the three sub procedures of the main procedure are applied, in any suitable order e.g. as follows: First, an "avoid new track" sub-procedure may be applied, since all other things being equal, it is typically preferable to keep existing tracks, rather than to start new tracks. Then the reassess merger sub-procedure may be performed, and then, the reassess split sub-structure sub-procedure may be performed. In this example, split and merge cases are firstly obtained, which are then cancelled.

Fig. 12 illustrates an example of retaining the ID number of cluster tracks. In this example a cluster track which starts at time t1 with ID10 and 3 targets, is then, at time t3, split into two cluster tracks. One cluster track will still keep the ID 10 since it includes 2 targets (out of 3), where the other cluster track includes only one target, and therefore it receives a new ID12. At time t4 the cluster track with ID 11 and one target, merge with the cluster track with ID 10 and 2 targets. Therefore, the ID of the cluster track, after merging, will remain 10.

Fig. 13 illustrates a general structure of the procedure for computing the bias for 2 sensors in the CCA-MHT architecture. In this structure pairs of superplots from two different sensors are constructed. Then, the extrapolation process for each pair is applied, in order to get pairs of super-plots with the same time tag. At this stage, it is possible to compute the 3 biases separately.

Fig. 14 illustrates a general structure for computing one relative bias value. It may be assumed that a list of super-plot pairs from two radars already exists. In this way, the statistical distance (SD) between each pair of super-plots is computed, this being the first function. Then the order of the list of pairs is rearranged, according to their SD values and the values of the ratio of two variances for each sub-list of the ordered SD values are computed, following which this function is plotted. An iteration procedure then begins, in which, in each operation, the minimum, maximum and the optimal bias values are computed. Convergence of the optimal bias value is checked. Incorrect pairs are filtered out, and the iteration process is repeated. Should there be convergence, the results are analyzed, and the bias value is outputted.

Fig. 15 illustrates the behavior of the variance ratio function. The minimum point of the first iteration (where the variance ratio is 1) is marked, as well as the maximum point of the first iteration (phase transition point). The minimum and maximum points for the second and fifth iteration are also marked. This illustrates that the convergence process is proceeding.

Fig. 16 illustrates a structure for computing the biases for 2 sensors in the general architecture, where each sensor has its own tracker. In this case, the track to track association procedure is firstly applied between the tracks of sensor 1 and the tracks of sensor 2. Then the plot to plot association procedure between the associated tracks is applied. At this stage, it is possible to continue with the same procedure which was applied for the CCA-MHT, as presented in Fig. 13.

Referring again to Fig. 1:

### Pre-processing unit

The first function applicable in the system architecture of Fig. 1 is the pre-processing of the system input. This function is presented in more detail in Fig. 2. Since all the various plots from various sensors are treated in the same manner, and since the various plots have different input data, it is sought to transform the input data to a common structure input, termed a superplot, located on a given common coordinate system. This is done by applying this preprocessing function.

The process (e.g. as shown in Fig. 2) begins with identification of the origin sensor (for example, radar) of the current input data, i.e. the new detection. The detection obtained from each sensor type might include different relevant location fields. It is therefore sought to check whether the location of the data is expressed in the desired coordinate system. If so, the process may continue. If not, the appropriate coordinate transformation may be applied. For example, for radar, the Antenna Cartesian coordinate System (ACS) may be converted to the Regional Geographic Cartesian coordinate System (RGC). After applying the coordinate transformation, the new detection is rewritten in the common input structure, including all relevant fields, if such existed. The system may proceed even in cases where some fields are missing. Location of the new detection may be enhanced by using the computed bias-data. Then, the input errors are used, if given; otherwise they are estimated, in order to derive the covariance matrix in the common coordinate systems. The output of this process is a general detection termed a superplot.

Typically, in this operation, the system architecture treats the various detections one by one, and not in batches. For example, all detections from a new radar beam scan are not treated simultaneously, but rather one by one, superplot by superplot. This yields good tracking results.

### Multiple Hypothesis Tracker Units

After obtaining the superplot (upon reception) the MHT is applied, which creates tracks, updates tracks, and defines their relation, subject to the processing of each input. This function is presented in more detail in Fig. 3, beginning with the correlation process. In this process, each superplot, upon its arrival, is correlated to each track in a group of existing tracks and correlation likelihoods for each track are computed. The existing tracks reside in the CCA-MHT database.

If the correlation likelihood to a track exceeds a predefined likelihood threshold, a corresponding association is declared. These associations are used in the next block in Fig. 3. In this block, new updated tracks are created. Each updated track is declared as the 'son' of the original track which is labeled 'father'. The terms 'son' and 'father' enable track generation definitions, which are referenced with a layer number. A layer number is attached to a track in a manner that a father's layer is its son layer number, plus one. Use of the layer property is mostly for pruning tracks belonging to an old generation, and to prefer a detection correlation to new (generation) tracks.

Moreover, if the superplot has not been correlated to any track with sufficient likelihood, a new additional track is created with this superplot. However, if the number of associations (for a distinct superplot) exceeds a predefined value, the associations with a relative small likelihood are discarded and do not create a corresponding track.

A track score is computed for every generated (updated or new) track. This score is a function of the correlation likelihood evaluated above, and further features, such as the number of detections contained in the track, its update rate, the track's status, number of updating sensors, etc. The generated tracks are transferred into the next block in Fig. 3, in which the ambiguity tree is constructed.

The ambiguity tree may include plural ambiguities. Every received superplot creates a new ambiguity in the ambiguity tree. Each ambiguity contains plural alternatives. Each alternative designates a generated track which results from that superplot, as indicated above. Moreover, the MHT is track-oriented. That is, the raw data in the system are tracks in the manner that tracks are created, updated and pruned (deleted). When a picture has to be outputted, it is built on the basis of the current ambiguity tree.

Typically, an exclusions list is created for each track. This list designates tracks that cannot coexist in same picture with the given track, since the tracks share common superplots.

### CCA-MHT database

The CCA-MHT database (Fig. 1) includes the tracks with their ID, geographical data (state, covariance), tactical data, and statuses of the tracks. Also, it includes the ambiguities and alternatives as part of the ambiguity tree and the pictures to be outputted at the presentation center.

### Maintenance

The maintenance method (see Fig. 1) maintains the ambiguity tree and is performed on the CCA-MHT database. The maintenance method is a periodic task which is invoked independently of the detection arrivals according to a pre-defined cycle. The method is typically configured for checking whether a track has not been updated by any superplot within a specified grace time, designating a non-relevant ('old') track. If so, the pruning operation is activated, and that track is declared obsolete, and does not take part in any process. As a result, the corresponding alternatives, ambiguities and exclusions are deleted. Therefore, a more up-to-date ambiguity tree is generated.

### Build pictures process

Having the final list of ambiguities and exclusions in the ambiguity tree, the process continues to the next operation, Build pictures, as described in Fig. 4. The meaning of a "picture" is a set of active non-overlapping tracks (due to the exclusions lists) at a given time. Typically, each superplot should reside only in one of the tracks contained in the picture, and all tracks in a legitimate picture must contain a mutually independent set of constructing detections.

The MHT described herein is typically track-oriented; the raw data in the system include tracks, and tracks are created, updated and pruned (deleted). When a picture has to be outputted, it is built on the basis of the current ambiguity tree.

Also, e.g. because of independency between the building track process and the building pictures process, the last process can be activated upon user request or periodically for obtaining the best picture, and not after each detection arrival. The independency of the build picture operation from the main operations enables complexity reduction, since it does not have to be applied for every new superplot. This is especially useful when detections arrival rate is high.

In the first operation of Fig. 4, a predefined number of best pictures that represent the current state, are derived This derivation is illustrated in Fig. 5. The first function in Fig. 5 is obtaining the list of active ambiguities, i.e. those with a non-zero number of not obsolete tracks, from the database.

In the next operation, the ambiguities list is divided into independent groups of ambiguities which are classified using the exclusion list. The partition into groups is performed under the constraint that every two ambiguities that share at least one exclusion, will reside in the same group. That is, there are no restrictions between chosen tracks from two different groups. Hence, each group may be processed separately to derive a number of its best pictures. Therefore, this process may be performed independently, in each group, in parallel, and thus significantly reduce the computation complexity. A practical example for group partition is a partition due to disjointed geographical areas.

The derivation of the best pictures in a given group, the next operation in Fig. 5, is based on its list of ambiguities and exclusions obtained in the previous operations. Since each alternative in each ambiguity has a score, the best picture in a given group may be built by taking the alternatives with the best score, and checking them against the exclusion list (i.e. no exclusion exists between tracks in the picture). The summation over the scores of all the tracks (alternatives) yields the picture score which is related to the picture quality. Therefore, in this case, the best picture of the given group has been built.

The next best picture is obtained by considering the second best alternative of each ambiguity, and choosing the best one of them. In this way the third best picture and more may be obtained. Typically, no more than 3 pictures are needed.

Typically, the system is configured for obtaining the best pictures and their scores, in most practical cases, without deriving all available pictures. This efficient process evaluates the pictures by decreasing the score until the desired number of pictures is obtained (which is a system parameter). An exhaustive enumeration of all possible pictures is not performed.

### Joining best pictures groups

In the last operation of Fig. 5, global best pictures are obtained by joining the best pictures derived from all groups. Typically, the best global picture is built from the best pictures of the related groups. The next picture is obtained by considering the second best picture of the groups, and choosing the best one of them. In this way the third best picture may be obtained, and so on. Typically, no exclusions between the groups are considered, since no exclusion is shared between any two groups. Finally, the output of this stage is a unified global list of best pictures.

### Output picture selection

After obtaining the predefined number of global best pictures, the best pictures are compared to the picture outputted in the previous dissemination interval, and it is decided which one of them will be selected and outputted in the current dissemination interval. This operation is useful for maintaining continuous tracking subject to a score threshold. This is the second operation of Fig. 4.

In the last operation of Fig. 4 a comparison is done of the present selected picture, to the previous selected picture. Based on this comparison, every track in the picture is assigned by a 'Tasp type' that defines its status. Some various types are new, deleted, same (no change in the track), and updated.

In addition to assignment of Tasp types, tracks states and covariance matrices updated to the Tasp time, are generated via prediction, and outputted as their last update.

An example for ambiguity tree construction, including the list of exclusions created and the pictures evaluated, is presented below.

### Ambiguity tree update process - example

Assume there are three targets and one sensor in which the following sequential operations occur:
Operation 1: The sensor receives the first superplot (SP1) from Target 1, creating the first ambiguity (amb1) in the ambiguity tree with one alternative containing the track T1 initiated from SP1. Since no tracks existed, no correlations were tested or recorded.
Operation 2: The sensor receives the second superplot (SP2) from Target 2 which does not correlate to the existing track T1. Therefore it creates T2 initiated from SP2 which resides in the only alternative in next ambiguity created, amb2.

At this stage there are two tracks in the track store.

Also, since there were no correlations, no exclusions between the tracks were built.

At this stage the only legitimate picture is built by choosing the only alternative from each ambiguity, that is T1 and T2 which may coexist in the same picture (they do not exclude each other).

Operation 3: The sensor receives the third superplot (SP3). Assume SP3 correlates both to T1 and T2. The association possibilities may include creating a new track with SP3, or updating a correlated track. Hence, a third ambiguity, amb3, is created for SP3 containing the three alternatives:
- alternative 1: creating a new track T3, initiated by SP3
- alternative 2: updating T1
- alternative 3: updating T2

These 3 alternatives are presented in Fig. 6. The current ambiguity tree is presented in Fig. 7.

At this stage an exclusion list is constructed. The list contains the following statements and is marked by arrows in Fig. 7:
- Alternative 2 of Ambiguity 3 excludes Ambiguity 1 ('son-father'). That is, T4 ('son' of T1) cannot coexist with T1 (its 'father') since they share a common detection, which is SP1.
- Alternative 3 of Ambiguity 3 excludes Ambiguity 2 ('son-father'). That is, T5 ('son' of T2) cannot coexist with T2 (its 'father') since they share a common detection, which is SP2.

The set of legitimate pictures at this stage are:
Picture 1: choosing Alt 1 from each of the three ambiguities: T1, T2, T3 (no exclusions exist between the three alternatives), designating three different tracks, each with one detection.
Picture 2: choosing Alt 2 of Amb 3 (T4) and Alt 1 of Amb 2 (T2): (no alternative is chosen from Amb 1 since it is excluded by T4), designating one track with two detections, and another track with one detection.
Picture 3: choosing Alt 3 of Amb 3 (T5) and Alt 1 of Amb 1 (T1): (no alternative is chosen from Amb 2 since it is excluded by T5), designating one track with two detections, and another track with one detection.

These three pictures are presented in Fig. 8.

As may be seen from the above example, the number of tracks in each picture is at most the number of ambiguities (3 ambiguities for this example). Also, each alternative in a picture is selected from a different ambiguity.

### Track Segments links computation

The segments link derivation method is described in Fig. 9. It is activated periodically, or upon user request. The process described herein is typically configured to estimate the possibility to connect obsolete tracks to new tracks that were not connected by the tracker because of miss detections or miss connections to detections for a relatively long time. The aim of such is to check whether a given new track is actually the continuation of a given obsolete track. The current process checks whether this connection is reasonable, based on various kinematic measures.

In fact, there are plural obsolete tracks, and also plural new tracks. The current process enables to decide, for each deleted track, whether it is updated by a new track from the list of the new tracks, or whether it may be connected to any new track. The decision is based on using kinematic measures e.g. as mentioned above.

For each measure, there is typically a given minimum value. If the values of all the appropriate measures for a given track segment link are above the given minimum values, respectively, a global score of this appropriate link is computed. If the global score is greater than the minimum given score, it may be asserted that a new possibility of link exists. All the links that passed the minimum score are collected, and the Munkres application is applied on these links. This application selects the best links which are delivered to the presentation center. The process may include all or any subset of the following operations, suitably ordered e.g. as illustrated in Fig. 9:
1. Collect all the recently deleted tracks to form an obsolete list tracks and all the confirmed tracks to form a new list tracks - first operation in Fig. 9.
2. Define various selection rules for candidate links (pairs of old tracks and a new track). These selection rules may comprise the following:
   a. Maximum gap time between the last update time of an old track, and the first time of a new track; and/or
   b. Maximum velocity permitted in the gap. i.e. estimate the velocity in the gap by computing the distance between the tracks divided by the time difference.
   Track pairs that are included in these selection rules (or others) are selected - second operation (function) in Fig. 9.
3. For all retained candidate couples, plural measures are computed, and the appropriate scores are computed- third operation (function) in Fig. 9. These measures may, for example, include all or any subset of:
   a. Angle fit measure - the angle between the directions of the two tracks.
   b. Velocity fit measure - the speed differences between the two tracks.
   c. Distance fit measure - the statistical distance between the two tracks.
   Couples are only found if the above three measures are below the maximum limits, respectively. Then, a global final score for each pair, on the basis of the values of the measures, is obtained.
4. Apply the Munkres function on a matrix that contains the global scores for all retained couples, and obtain the best assignments of the track couples - the fourth operation (function) in Fig. 9.
5. Updating the lists: assignments with final score above a given threshold are declared 'linked' and deleted from the two lists. Also, new tracks with no assignments are deleted - the last operation (function) in Fig. 9.
   Finally, the retained tracks (old and new) comprised in the two original lists are to be reconsidered in the next application of the method, together with the additional lists' entries, (i.e. The arrow from the bottom to the top in Fig. 9).

### Cluster Tracker

The MHT system described herein may be improved by adding a cluster tracker, e.g. as illustrated in Fig. 1. As shown, the cluster tracker obtains the tracks after they have been created by the "build picture" operation, and transfers the cluster tracks to the main MHT operation (and to the bias correction operation). Although the MHT operation may also function without the cluster tracker operation, by using the cluster tracks achievements of the MHT tracks may be improved.

The cluster tracker is typically configured to group closely separated MHT tracks, obtained from targets flying in a group, and display them as a cluster track. However, single targets will be still tracked individually. Single targets will belong to a cluster containing one individual target.

Distinguishing between close targets is difficult since association between close flying targets may produce incomprehensible 'spaghetti like' tracks, or, in the worst case, a jittering of the track velocity, followed eventually by complete track loss. In the cluster tracker, the entire group of the close targets is tracked as a unified entity - a cluster track. The location and velocity of the cluster track are computed by averaging the locations and velocities of its components. Therefore, the cluster track is expected to be much smoother than those of the individual targets. Therefore, the cluster track information (especially the velocity of the cluster track) is fed back to the MHT tracker, in order to stabilize the individual target tracking. Results of the cluster tracker to the bias computation function are now described.

### Cluster tracker general architecture

The general architecture of the cluster tracker is illustrated in Fig. 10. After obtaining the best picture, the cluster tracker operation extracts the updated MHT tracks (see Fig. 1 and Fig. 10). Generally, the MHT tracker produces a new picture periodically with period Tpic. The periodicity of the cluster tracker main cycle will therefore be Tpic too. All the various operations (functions) of the cluster tracker are illustrated in Fig. 10. The first function is the preliminary clustering. This function accepts the list of tracks, contained in the MHT picture, and groups the updated states (of these tracks) that are in close proximity of space, time and kinematics, into clusters. Each cluster is identified by its cluster ID, update time, center of mass with its covariance, and the velocity with its covariance.

The second function of the cluster tracker is association of the cluster tracks to the new clusters that have just been created. Typically, the newly formed cluster entities are associated with the existing cluster tracks. The association between clusters and cluster tracks is based on identity of the tracks contained within each cluster and cluster track. The output of the association operation is a list of links associating clusters to cluster tracks.

Since, in cluster tracking, it is possible for a single cluster track to split into plural tracks, and also for plural tracks to merge into a single track, a many-to-many association is sought. This implies that a merging scenario, or splitting incident, is to be performed. Therefore, the system must record this history of merging and splitting, and keep track of which branch each individual target belongs to.

Following such association, and based on its results, three types of cluster tracks are obtained: one type is the regular updated cluster tracks, the second type is the new cluster tracks (starting with the new clusters), and the third type is the cluster tracks undergoing merging or splitting. The third function of the cluster tracker is configured to analyze all the associations and to split them into these three types. Then, the associations belonging to each type are transferred to the appropriate function (see Fig. 10). The new tracks and the regular updating tracks are transferred directly to the track updating/creating new tracks function. In cases of merging and splitting, the relevant data is transferred to the Clusterization/Reassessment function.

The reassessment procedure is typically configured to maintain tracking continuity and stability by adjustment of clustering parameters, such as to subdue constant splitting and merging of tracks. This goal is achieved by tweaking the clustering parameters, so as to subdue merging or splitting of tracks.

The reassessment procedure may be performed in stages e.g. all or any subset of the following stages: avoid new, reassess merger, and reassess split. These stages are described using the example presented in Fig. 11, for clarity. In this figure, on the left side, are two cluster tracks, each one with two targets. After application of the regular association procedure, track 2 is split into two tracks (clusters), one with one target, and the second cluster consists of one target from track 2, and one target from track 1. In addition, track 1 merged with one target from track 2, and one target from track 1. In addition, one target from track 1 started a new track. This means that the cluster tracks are totally out of order in this case.

In such cases, all three stages of the reassessment procedure are applied, as follows:
1. Avoid new: unassociated clusters which are candidates for opening new tracks are given a second chance to be clustered to nearby existing tracks. Then, track 1 in Fig. 11 is not split to two clusters, but rather merges with one target from track 2.
2. Reassess merger: clusters associated to multiple tracks, thus creating a merge occurrence, are shrunk in an attempt to avoid merging. Then, track 1 in Fig. 11 remains with its two targets, and track 2 is split into 2 tracks.
3. Reassess split: multiple clusters associated to a single track, thus creating a split incident, are enlarged, in an attempt to avoid splitting. Then, track 2 in Fig. 11 is once again the original track with 2 targets.

Typically, e.g. after a clustering decision and association has been finalized, the last function in Fig. 10 is applied, for track updating, and, e.g. if necessary, creating new cluster tracks. This process may include all or any subset of: track initial updating, track number, status handling, smoothing updating, and property updating. The last four parts typically correspond to four groups of track attributes: status and identity attributes, kinematic attributes, and tactical attributes. These parts are described below:
1. Initial updating. Based on the final association decisions, each appropriate cluster track is updated, merely by continuation of the track with the new cluster, or, if necessary, by merging or splitting it. Typically, in this operation no filter is applied. The new cluster state and covariance is obtained by averaging over its constituents - the new single states and covariances.
2. Track number. After the initial updating, the track number of each cluster track may be determined. For a new cluster track, a new number is determined, and for an existing track the number is merely retained. However, in case of a split/merge scenario, an index continuity process will be applied, in order to determine which of the child branches will carry the parent number, and which will be considered a new track carrying a new track number. Typically, the child branch with most of the original targets will continue to carry the original track number of the father.

An example of cases of split/merge of cluster tracks is presented in Fig. 12. In this figure, one begins at time t1 with cluster track with ID 10 and 3 targets. Then, at time t2 start cluster track with ID 11 and 1 target. At time t3 cluster track 10 is split into two cluster tracks, one with two targets, and the second with one target. The cluster track with the two targets still keeps the same ID 10, since it includes most of the targets of track 10, whereas the cluster track with one target receives new ID 12. At time t4 the cluster tracks 11 and 10 merge. The 'new" cluster track with three targets got ID 10, since most of its targets came from this cluster track.

3. Status handling. In this operation, after initial updating, the status of each updating cluster track is determined, based on the statuses of its member entities. Such statuses may be new, tentative, confirmed, split, or merged. At this time it is also sought to check the cluster tracks that have not been updated for a certain extent of time. The status of these tracks will change to 'delete' status, and these tracks will be transferred from the 'alive track' list to the 'deleted track' list.

4. Smoothing. As described above, up till now neither a smooth process, nor any filter process was used. Therefore, for example, the location of the last cluster in the track is the center of mass of its member tracks. However, this may cause errors or inconsistent problems in the cluster tracker. Consequently, a conventional smoothing process is applied, or a filter just for smoothing.

5. Property determining. In the last operation of the last function of the cluster process, some properties of the cluster tracks are determined. These properties may include all or any subset of:
- Statistical estimation of the true number of member targets represented by the cluster track, based on track history.
- A process to determine the 'dominant sensor' field, based on track history.
- A process to determine the 'maneuver flag' field, based on track history.

Finally, as may be seen from Fig.1, the final cluster tracks are transferred to three different places. The first place is the presentation center where these tracks are presented to the users. The second is to the main MHT, in which the smooth velocity of the cluster tracks is used, in order to correct the velocity of the member tracks of the cluster track. The third is the bias computation in which the cluster tracks data are used to correct the bias of the radars, e.g. as described forthwith.

### Bias Corrections

Computation of the bias correction is useful in conjunction with the CCA-MHT (e.g. as shown in Fig. 1) e.g. because different types of sensors are involved in the CCA-MHT, and it is typically not safe to assume that detections of the same targets at the same time, from different sensors, are adequate. Each sensor has its own unique bias of detections, relative to the real locations. Therefore, there is always relative bias between any two different sensors, even from the same type.

Various methods for computing the bias corrections are known in the art, and may be used herein.

The method presented in this application is typically configured for computing the relative bias correction e.g. to better perform (compared to other methods) cancellation of relative biases with regard to target measurements. The method may alternatively be used as an independent or standalone method e.g. in other systems with two or more sensors, and also for a tracker different from the MHT, e.g. as presented below.

The method may be applied here in cases in which the system has no knowledge about the real targets and their locations. Therefore, the method refers to the detections from one sensor as the "real targets" and this sensor is termed the "real sensor". Consequently, the biases of the other sensors will refer to these "real targets" and of course not to the true targets, which are not known. When a given sensor supplies the exact location of the targets, this sensor is termed the "real sensor".

The bias computation method may be applied to each radar sensor separately. The method may be implemented only in cases where measurements and tracks from the "real sensor" and the "current sensor" are obtained - the sensor whose biases are to be computed, where the two sensors scan the same area, or at least a common area i.e. the measurements refer to the same targets.

Fig. 13 presents a method for bias computation of the current radar. The input to this process is the superplots from the two sensors, for example, two different radars, the MHT tracks, and the cluster tracks. The system herein is not restricted to similar radars, but may apply successfully to two different radars that searched a common area at a common time.

This applies to the general case of two sensors which do not use the new tracker. In general, each sensor manages its own tracker. Generally, the starting operations of the bias computations are different. These operations are illustrated in Fig. 16 and will be described following description of operations that are related to the bias computation of the CCA-MHT.

Before starting the operations of Fig. 13, the system may decide or determine which sensor is the "real sensor" or reference sensor. Then, measurements from this sensor are deemed true or real data which has no biases. Assume, without loss of generality, that sensor 1 is the "real sensor"; bias corrections may then refer or be referred only to the second sensor. Biases of the second sensor may be computed relative to the first sensor. Given that the bias which is computed is relative, it typically makes no difference which sensor is selected or decided upon to be the "real sensor".

Assume that plural MHT tracks are obtained from superplots that originate from the two radars 1 and 2. Then, the first operation of Fig. 13 may be applied, to extract pairs of superplots, where each pair has a superplot from Radar 1, and another from Radar 2. In this operation t all superplots are collected that belong to the same given track, and an attempt is made to split some of them to pairs of superplots. The idea is to choose those pairs of superplots that are close in time and in Euclidean distance and belong to the same track, i.e. it may be assumed that these pairs describe the same target at close times, one to the other. Since the process yields better results as the number of the pairs increases, these superplots are collected from most of the tracks obtained in a given global picture.

Moreover the results of the cluster tracker were used in order to collect pairs of superplots from two sensors that may be related. In the cluster tracker very close tracks are combined into one cluster track. The cluster tracks possibly include more pairs of superplots not previously extracted. Therefore, an appropriate process is applied in order to construct new pairs of superplots from the cluster tracks.

The process used to extract the pairs of superplots typically operates as follows: for each superplot from sensor 1 (the "real sensor") the MHT track and cluster track (if such exists) of this superplot are checked, for nearby superplots from sensor 2. These nearby superplots must be close in time and distance to the "real" superplot from sensor 1. It may be that such superplots do not exist, or that there is more than one. In the last case the closest one, with minimum time difference and distance, is taken.

Assume that all the relevant pairs of superplots that were obtained from the two sensors have been collected. Since each pair of superplots belongs to the same track (or at least the same cluster track), it may further be assumed that the two superplots in each pair belong to the same real target. However, since the two superplots always have different time of detections, these two superplots cannot be equated and are typically brought to a common time e.g. using the second operation in Fig. 13.

Each pair includes two superplots, relatively close in time and distance, and belonging to the same track. Therefore the superplot "previously" in time has to be extrapolated to the time of the "updated" superplot. This extrapolation is done simply by using the velocity of the state function "previously" in time. The new location of this superplot is moved by the distance that equals to the product of the velocity, multiplied by the difference in time between these two superplots. The noise (i.e. covariance matrix) is typically moved by the same distance, but is not changed.

After completing this operation, a list of pairs of superplots is typically available, coming from two different sensors. Two superplots in each pair have the same time tag. These are the interpolated samples that are transferred to the next operation (third block in Fig. 13).

At this time, by using the list of pairs, the three biases may be computed- azimuth angle bias, elevation angle bias, and radial distance bias, by using a well-known process, i.e. non-linear least mean squares. This process may be applied separately, for each bias. It may be assumed that not all the pairs are correct, and incorrect pairs are unavoidably included in the list. The process as described in Fig. 14 may be employed, for providing one of the bias values. In the first operation the statistical distance (SD) between each pair of superplots is computed. This computation is used to check that the correct pairs of superplots have been selected. It may be assumed that the incorrect pairs of states are those pairs with relatively large values of SDs. Therefore, it is sought to remove pairs with large values. However, if too many pairs are removed, correct pairs may also be removed, leaving an insufficient number of pairs of superplots for accurate computation of the bias correction. Therefore, a process is described herein which is configured for correctly removing the wrong pairs.

In the second operation of Fig. 14 the list of pairs with their SD values are received. The list is re-ordered, according to SDs values.

An iterative operation then commences. Plural iterations may be performed for removing the wrong pairs. In every iteration those pairs with the largest statistical distance values are removed from the sample of pairs. Since a non-linear least square fit process is used for obtaining the final biases values, the number of pairs below the minimum value of pairs must not be reduced, which would yield incorrect results.

In each iteration three values of the desired bias are computed - the minimum value, the maximum value, and the reasonable value (which is, more or less, in between the minimum and the maximum values). The system may commence from the azimuth angle, and from a given group of pairs of plots - the next operation in Fig. 13.

Typically, the SD value for each pair is computed. Then, the variance and the mean SD values for the first i pairs (i=1,2,3,...N) are computed, where N is the total number of pairs. Then the variance by the mean value is divided. For the ideal case, with no interpolations, and regular noises, this ratio may be close to one. This ratio is then plotted as the number of pairs.

Typically, the figure plot appears similar to the plot illustrated in Fig. 15. From this plot the minimum and maximum number for the bias value may be determined, and its real value estimated. Based on basic statistics, it is reasonable to assume that the minimum value of the bias is related to bias of the pair of radar plots where the figure plot in Fig. 15 obtains the value 1 for the variance ratio. Similarly, it is reasonable to assume that the maximum value of the bias is related to bias of the pair of radar plots where the figure plot in Fig. 15 obtains the phase transition value for the variance ratio. For these two values from Fig. 15, the azimuth bias is computed by using the non-linear least square fit process. Having the minimum and maximum value for the azimuth bias, it may be assumed that the optimal value is close to the mean value of these two numbers. This ends the first iteration.

After completing the first iteration, the value of the first optimal bias is obtained. However, wrong pairs of radar plots may be included. It is possible that the two plots belong to two different targets. Wrong pairs may not be identified. However, it may be assumed that those pairs with high SD values may be incorrect.

After the number of the pairs has been reduced, one is left with a list of more reasonable pairs. Then the second iteration operation may commence. This operation is similar to the first operation described above. However, now, the minimum and the maximum values for the bias computation are different - see Fig. 15. Consequently, the optimal value for the azimuth bias is changed.

This operation may be repeated plural times (e.g. at least 5 iterations), each time receiving a new value for the optimal azimuth bias. Fig. 15 illustrates the minimum and the maximum value after 5 iterations. Each time the system may check whether the optimal value of the azimuth bias is convergence (see Fig. 14). If not, the system may continue with the next iteration. If so, the process is halted.

The best value for the bias azimuth from one set of pairs of plots is then obtained. However, this result is based on the list of pairs of plots (from two radars) that have been extracted from a given picture of tracks. Typically, the biases are not changed during the flight of an aircraft, but should a different list of pairs of plots be used, slightly different results may be obtained. Therefore, the same procedure has to be applied on a few more sets of pairs of plots that result from different pictures of tracks. This is the last operation of Fig. 14 - analyzing the results. Then, if all the other values are more or less the same, the mean value of the azimuth biases may be taken as the final optimal azimuth bias value. If not, the mean has to be normalized according to the number of pairs of plots in each set.

After obtaining the optimal bias value, the same procedure is repeated twice (Fig. 14), for computing the two other biases - the elevation angle bias and the radial distance bias. Although it is possible to compute all these three biases in parallel, where, iteratively, the current bias value of the azimuth angle, the elevation angle and the radial distance are computed, this is not effective and may yield inaccurate results. The reason is that in this process pairs with large values are filtered out (see Fig. 14). This process must be carried out with much care, since the number of pairs of plots that will adequately determine the optimal value of one bias is different from the number of pairs of plots that will adequately determine the optimal value of another bias. Finally, after repeating the operation in Fig. 14 three times, each time for a different bias, three optimal values for the 3 different biases are obtained - azimuth angle, elevation angle, and radial distance. From Fig. 1 it may be seen that these biases are transformed to the pre-processing operation. In this operation, location of superplot is corrected by the bias values. This correction involves coordinate transformation, since the superplots are obtained in Cartesian coordinates, whereas the biases are in the coordinates of azimuth angle, elevation angle, and radial distance.

It is appreciated that the method of bias computation described herein is useful for any use-case in which it is desirable to compute bias, and not necessarily in conjunction with, or related to, the CCA-MHT Architecture specifically described herein. The bias computation described herein is applicable to any system of two sensors.

In Fig. 16 operations useful for implementation of the system are shown in a general system. In such systems there are two sensors, where each sensor operates its own tracker, and the tracker creates its own tracks. It may be assumed that all the plots in a given track belong to the same target. However, since the two sensors are not identical, their plots and tracks are different. Therefore, any procedure of track-to-track association may be applied. It is thus possible to determine which track of one sensor is close to another track of the second sensor. It may be assumed that two associated tracks describe the same target. Thus, the plots belonging to one track are related to the plots from the appropriate track from the second sensor. All these plots belong to the same target.

Having the above assumptions, the system may proceed with the next operation in Fig. 16 - the plot-to-plot association procedure. In this procedure, the aim is to find, for each plot in a given track in sensor 1, the corresponding plot from the associated track in sensor 2. Then, pairs of plots from the same target are obtained. Thus, the list of pairs of plots are constructed.

Operations for applying the system for the general case (not CCA-MHT) are illustrated in Fig. 16; all or any subset of the operations may be performed. The first operations are related to the manner in which the list of pairs of plots from two separated trackers are extracted e.g. as described above. The operations which follow thereafter may include applying the extrapolation process, following which the three biases are computed e.g. may be identical to the operations shown in Fig. 13.

It is appreciated that terminology such as "mandatory", "required", "need" and "must" refer to implementation choices made within the context of a particular implementation or application described herewithin for clarity and are not intended to be limiting, since, in an alternative implementation, the same elements might be defined as not mandatory and not required, or might even be eliminated altogether.

Components described herein as software may, alternatively, be implemented wholly or partly in hardware and/or firmware, if desired, using conventional techniques, and vice-versa. Each module or component or processor may be centralized in a single physical location or physical device, or distributed over several physical locations or physical devices.

Included in the scope of the present disclosure, inter alia, are electromagnetic signals in accordance with the description herein. These may carry computer-readable instructions for performing any or all of the operations of any of the methods shown and described herein, in any suitable order, including simultaneous performance of suitable groups of operations, as appropriate. Included in the scope of the present disclosure, inter alia, are machine-readable instructions for performing any or all of the operations of any of the methods shown and described herein, in any suitable order; program storage devices readable by machine, tangibly embodying a program of instructions executable by the machine to perform any or all of the operations of any of the methods shown and described herein, in any suitable order i.e. not necessarily as shown, including performing various operations in parallel, or concurrently rather than sequentially as shown; a computer program product comprising a computer useable medium having computer readable program code, such as executable code, having embodied therein, and/or including computer readable program code for performing, any or all of the operations of any of the methods shown and described herein, in any suitable order; any technical effects brought about by any or all of the operations of any of the methods shown and described herein, when performed in any suitable order; any suitable apparatus or device or combination of such, programmed to perform, alone or in combination, any or all of the operations of any of the methods shown and described herein, in any suitable order; electronic devices, each including at least one processor and/or cooperating input device and/or output device, and operative to perform, e.g. in software, any operations shown and described herein; information storage devices or physical records, such as disks or hard drives, causing at least one computer or other device to be configured so as to carry out any or all of the operations of any of the methods shown and described herein, in any suitable order; at least one program pre-stored e.g. in memory or on an information network such as the Internet, before or after being downloaded, which embodies any or all of the operations of any of the methods shown and described herein, in any suitable order, and the method of uploading or downloading such, and a system including server/s and/or client/s for using such; at least one processor configured to perform any combination of the described operations or to execute any combination of the described modules; and hardware which performs any or all of the operations of any of the methods shown and described herein, in any suitable order, either alone or in conjunction with software. Any computer-readable or machine-readable media described herein is intended to include non-transitory computer- or machine-readable media.

Any computations or other forms of analysis described herein may be performed by a suitable computerized method. Any operation or functionality described herein may be wholly or partially computer-implemented e.g. by one or more processors. The invention shown and described herein may include (a) using a computerized method to identify a solution to any of the problems or for any of the objectives described herein, the solution optionally including at least one of a decision, an action, a product, a service or any other information described herein that impacts, in a positive manner, a problem or objectives described herein; and (b) outputting the solution.

The system may, if desired, be implemented as a network- e.g. web-based system employing software, computers, routers and telecommunications equipment, as appropriate.

Any suitable deployment may be employed to provide functionalities e.g. software functionalities shown and described herein. For example, a server may store certain applications, for download to clients, which are executed at the client side, the server side serving only as a storehouse. Any or all functionalities, e.g. software functionalities shown and described herein, may be deployed in a cloud environment. Clients, e.g. mobile communication devices such as smartphones, may be operatively associated with, but external to the cloud.

The scope of the present invention is not limited to structures and functions specifically described herein and is also intended to include devices which have the capacity to yield a structure, or perform a function, described herein, such that even though users of the device may not use the capacity, they are, if they so desire, able to modify the device to obtain the structure or function.

Any "if -then" logic described herein is intended to include embodiments in which a processor is programmed to repeatedly determine whether condition x, which is sometimes true and sometimes false, is currently true or false and to perform y each time x is determined to be true, thereby to yield a processor which performs y at least once, typically on an "if and only if' basis e.g. triggered only by determinations that x is true and never by determinations that x is false.

Any determination of a state or condition described herein, and/or other data generated herein, may be harnessed for any suitable technical effect. For example, the determination may be transmitted or fed to any suitable hardware, firmware or software module, which is known or which is described herein to have capabilities to perform a technical operation responsive to the state or condition. The technical operation may, for example, comprise changing the state or condition, or may more generally cause any outcome which is technically advantageous, given the state or condition or data, and/or may prevent at least one outcome which is disadvantageous, given the state or condition or data. Alternatively or in addition, an alert may be provided to an appropriate human operator or to an appropriate external system.

Features of the present invention, including operations, which are described in the context of separate embodiments may also be provided in combination in a single embodiment. For example, a system embodiment is intended to include a corresponding process embodiment, and vice versa. Also, each system embodiment is intended to include a server-centered "view" or client centered "view", or "view" from any other node of the system, of the entire functionality of the system , computer-readable medium, apparatus, including only those functionalities performed at that server or client or node. Features may also be combined with features known in the art, and particularly, although not limited, to those described in the Background section or in publications mentioned therein.

Conversely, features of the invention, including operations, which are described for brevity in the context of a single embodiment or in a certain order, may be provided separately or in any suitable sub-combination, including with features known in the art (particularly, although not limited to, those described in the Background section or in publications mentioned therein) or in a different order. "e.g." is used herein in the sense of a specific example which is not intended to be limiting. Each method may comprise all or any subset of the operations illustrated or described, suitably ordered e.g. as illustrated or described herein.

Devices, apparatus or systems shown coupled in any of the drawings may in fact be integrated into a single platform in certain embodiments or may be coupled via any appropriate wired or wireless coupling, such as but not limited to optical fiber, Ethernet, Wireless LAN, HomePNA, power line communication, cell phone, Smart Phone (e.g. iPhone), Tablet, Laptop, PDA, Blackberry GPRS, Satellite including GPS, or other mobile delivery. It is appreciated that in the description and drawings shown and described herein, functionalities described or illustrated as systems and sub-units thereof may also be provided as methods and operations therewithin, and functionalities described or illustrated as methods and operations therewithin may also be provided as systems and sub-units thereof. The scale used to illustrate various elements in the drawings is merely exemplary and/or appropriate for clarity of presentation and is not intended to be limiting.

Any suitable communication may be employed between separate units herein e.g. wired data communication and/or in short-range radio communication with sensors such as cameras e.g. via WiFi, Bluetooth or Zigbee.

It is appreciated that implementation via a cellular app as described herein is but an example, and, instead, embodiments of the present invention may be implemented, say, as a smartphone SDK, as a hardware component, as an STK application, or as suitable combinations of any of the above.

Any processing functionality illustrated (or described herein) may be executed by any device having a processor, such as but not limited to a mobile telephone, set-top-box, TV, remote desktop computer, game console, tablet, mobile e.g. laptop or other computer terminal, embedded remote unit, which may either be networked itself (may itself be a node in a conventional communication network e.g.) or may be conventionally tethered to a networked device (to a device which is a node in a conventional communication network, or is tethered directly or indirectly/ultimately to such a node).

Any operation or characteristic described herein may be performed by another actor outside the scope of the patent application, and the description is intended to include apparatus, whether hardware, firmware or software, which is configured to perform, enable or facilitate that operation, or to enable, facilitate or provide that characteristic.

The terms processor or controller or module or logic as used herein are intended to include hardware such as computer microprocessors or hardware processors, which typically have digital memory and processing capacity, such as those available from, say Intel and Advanced Micro Devices (AMD). Any operation or functionality or computation or logic described herein may be implemented entirely or in any part on any suitable circuitry including any such computer microprocessor/s as well as in firmware or in hardware, or any combination thereof.

It is appreciated that elements illustrated in more than one drawing, and/or elements in the written description, may still be combined into a single embodiment, except if otherwise specifically clarified herewithin. Any of the systems shown and described herein may be used to implement, or may be combined with, any of the operations or methods shown and described herein.

It is appreciated that any features, properties, logic, modules, blocks, operations or functionalities described herein which are, for clarity, described in the context of separate embodiments, may also be provided in combination in a single embodiment, except where the specification or general knowledge specifically indicates that certain teachings are mutually contradictory and cannot be combined. Any of the systems shown and described herein may be used to implement or may be combined with, any of the operations or methods shown and described herein.

Conversely, any modules, blocks, operations or functionalities described herein, which are, for brevity, described in the context of a single embodiment, may also be provided separately or in any suitable sub-combination, including with features known in the art. Each element e.g. operation described herein may have all characteristics and attributes described or illustrated herein, or, according to other embodiments, may have any subset of the characteristics or attributes described herein.

## Claims

1. An air surveillance tracker system for tracking of aerial targets, the system comprising:
at least one hardware processor (aka CCA-MHT processor) configured for receiving detections generated by multiple sensors of multiple types and for serially activating plural operations, including multi-hypothesis tracking, on the detections to yield an image (aka Target Air Situation Picture, TASP), of fused tracks,
wherein said detections are processed by the hardware processor one by one.

2. An air surveillance method for tracking of aerial targets, the method comprising:
providing at least one hardware processor (aka CCA-MHT processor) configured for receiving detections generated by multiple sensors of multiple types and for serially activating plural operations, including multi-hypothesis tracking, on the detections to yield an image (aka Target Air Situation Picture, TASP), of fused tracks,
wherein said detections are processed by the hardware processor, one by one.

3. A computer program product, comprising a non-transitory tangible computer readable medium having computer readable program code embodied therein, said computer readable program code adapted to be executed to implement an air surveillance method for tracking of aerial targets, the method comprising:
providing at least one hardware processor (aka CCA-MHT processor) configured for receiving detections generated by multiple sensors of multiple types and for serially activating plural operations, including multi-hypothesis tracking, on the detections to yield an image (aka Target Air Situation Picture, TASP), of fused tracks,
wherein said detections are processed by the hardware processor, one by one.

4. A system according to claim 1, wherein the at least one processor comprises Multiple Hypothesis Tracker, MHT, logic configured to build and/or evaluate at least one track.

5. A system according to claim 4, wherein the at least one processor further comprises a cluster tracker which forms clusters from at least one existing MHT track.

6. A system according to claim 4, wherein the MHT logic is configured to perform all or any subset of: correlation, track updating and ambiguity tree updating.

7. A system according to any one of claims 4 to 6, further comprising a picture processor which builds pictures and wherein the processor which builds pictures is independent from the MHT logic.

8. A system according to any one of claims 4 to 7, **characterized by** at least one of the following:
a. the MHT logic is configured to perform ambiguity tree updating and wherein said MHT logic maintains at least one ambiguity tree by repeatedly running a maintenance process in which hypotheses are pruned including deletion of non-relevant hypotheses, and tracks are created, updated or pruned (deleted) and each outputted picture outputted at a time *t* is built based on an ambiguity tree which is current at said time *t*, thereby to yield track-oriented MHT;
b. the MHT logic is configured to perform correlation; and
c. the MHT logic is configured to perform track updating.

9. A system according to claim 5, **characterized by**:
the cluster tracker aggregates plural tracks formed by the MHT logic into a cluster track, thereby to represent a formation of close flying targets and a smooth state vector of the cluster track is computed in which all members of the cluster track inherit a uniform smoothed velocity value,
and/or
the processor also comprises a bias computation unit which corrects bias using a bias correction process which computes bias errors of at least one of said multiple sensors and determines a bias input to said multi-hypothesis tracking (aka main process) wherein cluster tracker properties are integrated into said bias correction process.

10. A system according to any one of claims 1 and 4 to 9, wherein the at least one processor comprises a tracks segments links computer which links two compatible tracks segments into a single track,
wherein the system at least once prepares a first list of the last deleted tracks and a second list of new tracks and wherein a score for links between each deleted track and each new track is computed (aka candidate pair scores) and best links for presentation by a presentation center are extracted accordingly,
and wherein the system continuously prepares the first list of last deleted tracks and the second list of new tracks.

11. A system according to any one of claims 1 and 4 to 10, wherein the at least one processor comprises a bias computation unit which computes bias errors of at least one of said multiple sensors,
wherein said bias computation unit computes bias registration by computing and cancelling bias between said multiple sensors thereby to enhance tracking accuracy of targets based on said multiple sensors.

12. A system according to any one of claims 1 and 4 to 11, wherein the at least one processor comprises a picture processor which builds pictures, defines a list of best legitimate pictures, based upon a current track store, and selects from the list a best most appropriate picture to be outputted,
wherein a list of best pictures, whose scores are best according to a bestness criterion, is generated without constructing all possible pictures, thereby to ensure that an exhaustive search over all possible pictures is not required; and
wherein said list is constructed after a partition into independent groups of ambiguities, thereby to enable separate processing for each group of ambiguities by reducing complexity; and
wherein selection of the best most appropriate picture to be outputted includes comparison of the list, to at least one previously outputted picture stored in a database, and selecting a final best picture from the list which best avoids at least one of jumps in track's position and jumps in track's velocity.

13. A system according to claim 7, wherein the picture processor is activated, e.g., upon user request, after less than all time interval terminations, thereby to allow more track state hypotheses to be stored, by reducing complexity;
and/or
wherein the picture processor defines picture scores as a function of scores of tracks which reside at or are included in the picture.

14. A system according to claim 6, **characterized by** at least one of the following:
at least one pruning process is performed, including deleting at least one track found to belong to an old generation, based on a layer number;
at least one pruning process is performed, including deleting all but top scoring associations from among plural associations which are valid for a newly arrived detection, such that only the top scored associations construct tracks and all other associations are deleted;
the MHT logic is configured to use tactical and kinematical data to enhance gating and/or ambiguity resolution;
the MHT logic is configured to enable each single track to be composed of detections from different types of sensors, which update the track state serially;
the MHT logic is configured to generate plural alternative hypotheses as part of an ambiguity tree where each hypothesis comprises a logical track rather than a picture, thereby to yield track-oriented the MHT logic;
the MHT logic is configured to generate at least one list of exclusions between hypotheses on a basis of associations that are generated; and
the MHT logic is configured to assign a layer (generation) number to existing tracks and the layer number assigned to the existing tracks allows correlation of detection only to a small group of the existing tracks to be checked.

15. A system according to any one of claims 1 and 4 to 14, wherein the at least one processor comprises a pre-processor subsystem for pre-processing which transforms the detections into at least one common global structure of a new plot aka superplot;
wherein said pre-processor subsystem generates a superplot serving as a common input structure for detections of plural sensor types, **characterized in that** locations and errors of all inputs from all sensor types, all reside in the same coordinate system, thereby to facilitate reliable, consistent generation and updating of tracks;
and/or
wherein the processor supports situations in which detections from at least one of the plural types of sensors include less than all of plural data types defined in the superplots.

16. A system according to any one of claims 1 and 4 to 15, **characterized by** at least one of the following:
a. the at least one processor comprises a maintenance process which repeatedly maintains the system's elements;
b. said multiple types of sensors include at least two of the following types of sensors: Aerial Radar Sensors, IFF, Linked Data Network, Sigint systems, Optics systems, Communication Systems; and
c. said detections are time sorted and are treated serially (one by one) in order of time.
